# EUROPEAN PATENT APPLICATION

(11) **EP 4 561 136 A1**
(43) Date of publication of application: **28.05.2025**
(21) Application number: 23851453.3
(22) Date of filing: 29.06.2023
(51) Int. Cl.: H04W 12/084

(54) **COMMUNICATION METHOD AND COMMUNICATION APPARATUS**

(30) Priority: 12.08.2022 CN 202210972025
(71) Applicant: Huawei Technologies Co., Ltd., Shenzhen, Guangdong 518129 (CN)
(72) Inventor: HU, Li, Shenzhen, Guangdong 518129 (CN); WU, Rong, Shenzhen, Guangdong 518129 (CN)
(74) Representative: MERH-IP Matias Erny Reichl Hoffmann Patentanwälte PartG mbB
(86) International application number: PCT/CN2023/104165
(87) International publication number: WO 2024/032226

(57) **Abstract**

Embodiments of this application provide a communication method and a communication apparatus. The method includes: An API invoker sends an authorization request message to an authorization function network element. The API invoker receives a first token with integrity protection from the authorization function network element, where the first token indicates that the API invoker has permission to access data of a target user, and the first token includes an identifier of the target user. The API invoker sends a first API invocation request message to an API exposing function network element AEF, to request to invoke a target API to operate the data of the target user, where the first API invocation request message includes an identifier of the target user and the first token. The method provided in this application can avoid user privacy exposure, and reduce a potential security risk faced by a network function.

## Description

This application claims priority to Chinese Patent Application No. 202210972025.2, filed with the China National Intellectual Property Administration on August 12, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, the standard capability exposure architecture of the 3rd Generation Partnership Project (3rd Generation Partnership Project, 3GPP) provides a method for 3GPP to provide services externally. For example, an application function (application function, AF) network element may request a 3GPP network to process some information. The information may be data belonging to a network or data belonging to a user. For example, the AF may request 3GPP to externally send location information of the user. However, in this process, privacy information of the user may be illegally exposed.

### SUMMARY

This application provides a communication method and a communication apparatus, to avoid user privacy exposure and reduce a potential security risk faced by a network function in a mobile communication network.

According to a first aspect, a communication method is provided. The method may be performed by an application programming interface (application programming interface, API) invoker, or may be performed by a chip or a circuit used in the API invoker. This is not limited in this application. For ease of description, the following uses an example in which the method is performed by the API invoker for description.

The method includes: The application programming interface API invoker (API Invoker) sends an authorization request message to an authorization function network element (for example, (authorization function, AuF)), where the authorization request message includes an identifier of a target user. The API invoker receives an authorization response message from the authorization function network element, where the authorization response message includes a first token with integrity protection, the first token indicates that the API invoker has permission to access data of the target user, and the first token includes an identifier of the target user. The API invoker sends a first API invocation request message to an API exposing function network element (API exposing function, AEF), where the first API invocation request message is used to request to invoke a target API to operate the data of the target user, and the first API invocation request message includes an identifier of the target user and the first token.

According to the solution provided in this application, the API invoker may actively obtain, from the AuF, a token of a finer granularity authorized by a user, and access the AEF by using the token, so that the AEF can authorize the API invoker to access an API and process data of a user. According to the method disclosed in this application, whether the user performs authorization is considered when the data of the user is processed, to avoid exposure of user privacy information, and reduce a potential security risk faced by a network function in a mobile communication network.

With reference to the first aspect, in some implementations of the first aspect, before the API invoker sends the authorization request message to the authorization function network element, the API invoker sends a second API invocation request message to the AEF, where the second API invocation request message is used to request to invoke the target API to operate the data of the target user, and the second API invocation request message includes an identifier of the target user. The API invoker receives an authorization indication from the AEF. That the API invoker sends an authorization request message to an authorization function network element includes: The API invoker sends the authorization request message to the authorization function network element based on the authorization indication.

Based on the foregoing solution, the AEF provides the authorization indication for the API invoker, so that the API invoker determines that authorization of the user is required for requesting to invoke the target API to operate the data of the target user, and then initiates the authorization request to the authorization function network element based on the received authorization indication. Authorization of the target user is introduced in an API invocation procedure, to avoid exposure of user privacy information and reduce a potential security risk in the communication network.

With reference to the first aspect, in some implementations of the first aspect, the authorization indication includes an address of the authorization function network element. That the API invoker receives an authorization indication from the AEF includes: The API invoker receives a second API invocation response message from the AEF, where the second API invocation response message includes the authorization indication.

Based on the foregoing solution, the API invoker may send the authorization request message to the authorization function network element by using the address of the authorization function network element carried in the authorization indication.

With reference to the first aspect, in some implementations of the first aspect, before the API invoker sends the authorization request message to the authorization function network element, the API invoker sends a second request message to a common API framework core function network element (common API framework core function, CCF), where the second request message is used to request to register the API invoker with the CCF or used by the API invoker to discover the target API. The API invoker receives an authorization indication from the CCF. That the API invoker sends an authorization request message to an authorization function network element includes: The API invoker sends the authorization request message to the authorization function network element based on the authorization indication.

Based on the foregoing solution, the CCF provides the authorization indication for the API invoker, so that the API invoker determines that authorization of the user is required for requesting to invoke the target API to operate the data of the target user, and then initiates the authorization request to the authorization function network element based on the received authorization indication. Authorization of the target user is introduced in the API invocation procedure, to avoid exposure of user privacy information and reduce a potential security risk in the communication network.

With reference to the first aspect, in some implementations of the first aspect, the authorization indication includes an address of the authorization function network element. That the API invoker receives an authorization indication from the CCF includes: The API invoker receives a second API invocation response message from the CCF, where the second API invocation response message includes the authorization indication.

It should be understood that the second API invocation response message from the CCF herein is a message in response to the second request message.

Based on the foregoing solution, the API invoker may send the authorization request message to the authorization function network element by using the address of the authorization function network element carried in the authorization indication.

With reference to the first aspect, in some implementations of the first aspect, the second API invocation response message is a redirection request message.

Based on the foregoing solution, after receiving the redirection request message, the API invoker determines the address of the authorization function network element based on the authorization indication carried in the redirection request message, and then sends the authorization request message to the authorization function network element. In this implementation, the API invoker may not know a specific meaning of the authorization indication information.

With reference to the first aspect, in some implementations of the first aspect, the authorization indication further includes a cause value, and the cause value indicates that authorization of the target user is required for requesting to operate the data of the target user.

Based on the foregoing solution, the API invoker may determine, by using the cause value and the address of the authorization function network element that are carried in the authorization indication, that authorization of the target user needs to be obtained from the authorization function network element, and then send the authorization request message to the authorization function network element. In this implementation, the API invoker knows a specific meaning of the authorization indication information, so that the API invoker requests to obtain authorization of the user more specifically.

With reference to the first aspect, in some implementations of the first aspect, the authorization indication includes a cause value, and the cause value indicates that authorization of the target user is required for requesting to operate the data of the target user. That the API invoker sends the authorization request message to the authorization function network element based on the authorization indication includes: The API invoker determines an address of the authorization function network element based on the cause value. The API invoker sends the authorization request message to the authorization function network element based on the address of the authorization function network element.

Based on the foregoing solution, the API invoker may determine, by using the cause value carried in the authorization indication, that authorization of the target user is required for requesting to operate the data of the target user, to find the address of the authorization function network element based on the cause value, and send the authorization request message to the authorization function network element.

With reference to the first aspect, in some implementations of the first aspect, that the API invoker determines an address of the authorization function network element based on the cause value includes: The API invoker obtains the address of the authorization function network element from a preconfigured address list based on the cause value.

Based on the foregoing solution, the API invoker may determine, by using the cause value carried in the authorization indication, that authorization of the target user is required for requesting to operate the data of the target user, to find the corresponding address of the authorization function network element from the preconfigured address list, and send the authorization request message to the authorization function network element.

With reference to the first aspect, in some implementations of the first aspect, the authorization indication further includes an authorization type, and the authorization request message further includes a response type. Before the API invoker sends the authorization request message to the authorization function network element based on the authorization indication, the API invoker determines the response type based on the authorization type.

Based on the foregoing solution, the API invoker determines, by using the authorization type carried in the authorization indication, the response type carried in the authorization request message sent to the authorization function network element, so that user authorization can be performed more specifically in the API invocation procedure, thereby ensuring consistency of information exchange between network elements, and reducing potential network risks and interference to some extent.

With reference to the first aspect, in some implementations of the first aspect, the first API invocation request message further includes a second token, the second token indicates that the API invoker has permission to invoke the target API, and the second token includes an identifier of the API invoker and an identifier of the target API. Before the API invoker sends the first API invocation request message to the AEF, the API invoker sends a first request message to the common API framework core function network element CCF, where the first request message is used to request to obtain permission to invoke the target API, and the first request message includes an identifier of the API invoker and an identifier of the target API. The API invoker receives the second token from the CCF.

Based on the foregoing solution, the API invoker may carry the first token and the second token when requesting to invoke the target API to operate the data of the target user. In other words, the API invoker may be authorized to have permission to invoke (or access) the target API, and may be authorized to have permission to invoke the target API to operate the data of the target user. This can ensure integrity and security of this API invocation procedure, provide two-layer assurance for protecting user privacy security, and reduce a potential communication risk.

With reference to the first aspect, in some implementations of the first aspect, the first token further includes one or more of the following: expiration time; an identifier of the API invoker; an identifier of the target API; or a signer.

Based on the foregoing solution, more claim information is provided in the first token, so that security of this API invocation can be further ensured, and multi-layer assurance can be provided to protect user privacy information from being exposed, thereby helping reduce a network communication risk.

With reference to the first aspect, in some implementations of the first aspect, the authorization request message further includes an identifier of the target API and/or the identifier of the target user.

Based on the foregoing solution, the identifier of the target API and/or the identifier of the target user are/is carried in the authorization request message, so that the invocation request of the API invoker is more specific, and the first token subsequently generated by the authorization function network element has more claim content information. This helps provide a more secure protection measure for the target user in the API invocation procedure, and avoid a risk such as exposure of user personal data.

According to a second aspect, a communication method is provided. The method may be performed by an API exposing function network element AEF, or may be performed by a chip or a circuit used in the API exposing function network element. This is not limited in this application. For ease of description, the following uses an example in which the method is performed by the API exposing function network element for description.

The method includes: The AEF receives a first API invocation request message from an API invoker, where the first API invocation request message is used to request to invoke a target API to operate data of a target user, the first API invocation request message includes a first token with integrity protection and an identifier of the target user, the first token indicates that the API invoker has permission to access the data of the target user, and the first token includes an identifier of the target user. The AEF determines, based on the first token, whether the API invoker has permission to operate the data of the target user. The AEF determines, based on a determining result, whether to provide the API invoker with permission to access the data of the target user.

According to the solution provided in this application, in an API invocation procedure, the AEF may determine, by checking the first token of a finer granularity used for user authorization, whether the API invoker has permission to operate the data of the target user. Further, the AEF may determine, based on the determining result, whether to provide the API invoker with permission to access the data of the target user. Based on multi-layer check performed by the AEF on the API invocation request, user privacy information can be prevented from being exposed, and a potential security risk faced by a network function in a mobile communication network can be reduced.

With reference to the second aspect, in some implementations of the second aspect, that the AEF determines, based on the first token, whether the API invoker has permission to operate the data of the target user includes: The AEF checks the integrity protection of the first token based on a credential of an authorization function network element, where the authorization function network element is a network element that generates the first token. When the check on the integrity protection of the first token succeeds, the AEF determines whether the identifier of the target user carried in the first token is consistent with the identifier of the target user carried in the first API invocation request message.

Based on the foregoing solution, the AEF may first check the integrity protection of the first token by using the credential of the authorization function network element. Further, the AEF determines whether the identifier of the target user carried in the first token is consistent with the identifier of the target user carried in the first API invocation request message. Authenticity and accuracy of the first token are ensured through double check, so as to provide security assurance for subsequently accepting the request of the API invoker to operate the data of the target user, avoid exposure of user privacy, and increase a potential risk.

With reference to the second aspect, in some implementations of the second aspect, the first token further includes a signer. Before the AEF checks the integrity of the first token based on the credential of the authorization function network element, the method further includes: The AEF obtains the credential of the authorization function network element based on the signer.

Based on the foregoing solution, authenticity and reliability of authorization of the user can be determined by signing the first token, so that the AEF subsequently checks whether the information that the first token determines that the user consents to operate the personal data of the target user is true and valid, thereby avoiding an infringement on the target user caused by malicious tampering by another network element and a potential risk.

With reference to the second aspect, in some implementations of the second aspect, the first token further includes an identifier of the API invoker, the first API invocation request message further includes an identifier of the API invoker, and that the AEF determines, based on the first token, whether the API invoker has permission to operate the data of the target user further includes: The AEF determines whether the identifier of the API invoker carried in the first token is consistent with the identifier of the API invoker carried in the first API invocation request message.

Based on the foregoing solution, the identifier of the API invoker is carried in each of the first token and the first API invocation request message, so that the AEF can determine, by determining whether the two identifiers of the API invoker are consistent, whether the first token is valid, thereby preventing the first token from being maliciously tampered with, and reducing a risk of exposing personal information of the target user.

With reference to the second aspect, in some implementations of the second aspect, the first token further includes an identifier of the target API, the first API invocation request message further includes an identifier of the target API, and that the AEF determines, based on the first token, whether the API invoker has permission to operate the data of the target user further includes: The AEF determines whether the identifier of the target API carried in the first token is consistent with the identifier of the target API carried in the first API invocation request message.

Based on the foregoing solution, the identifier of the target API is carried in each of the first token and the first API invocation request message, so that the AEF can determine, by determining whether the two identifiers of the target API are consistent, whether the first token is valid, thereby preventing the first token from being maliciously tampered with, and reducing a risk of exposing personal information of the target user. In addition, the AEF can determine, by checking the identifier of the target API, whether the API invoker is authorized to have permission to invoke the target API.

With reference to the second aspect, in some implementations of the second aspect, the first API invocation request message further includes a second token. Before determining whether the API invoker has permission to operate the data of the target user, the AEF determines, based on the second token, that the API invoker has permission to invoke the target API.

Based on the foregoing solution, the second token is carried in the first API invocation request message, and when the second token is checked, it is determined that the API invoker has permission to invoke the target API. In this implementation, multi-layer check is provided for the invocation request of the API invoker, to ensure security and reliability of user data operated by using the API invocation request.

With reference to the second aspect, in some implementations of the second aspect, the second token further includes an identifier of the target API, and the first API invocation request message further includes the identifier of the target API. That the AEF determines, based on the second token, that the API invoker has permission to invoke the target API includes: The AEF determines that the identifier of the target API carried in the second token is consistent with the identifier of the target API carried in the first API invocation request message.

Based on the foregoing solution, the AEF may determine, by determining whether the two identifiers of the target API carried in the second token and the first API invocation request message are consistent, whether the API invoker can be authorized to invoke the target API. In this implementation, the second token is checked, to reduce a risk of exposing personal information of the target user, and provide double assurance for the API invocation procedure, thereby improving security.

With reference to the second aspect, in some implementations of the second aspect, before the AEF receives the first API invocation request message from the API invoker, the AEF receives a second API invocation request message from the API invoker, where the second API invocation request message is used to request to invoke the target API to operate the data of the target user, and the second API invocation request message includes an identifier of the target user. The AEF sends an authorization indication to the API invoker, where the authorization indication indicates that authorization of the target user is required for requesting to operate the data of the target user.

Based on the foregoing solution, the AEF provides the authorization indication for the API invoker, so that the API invoker determines that authorization of the user is required for requesting to invoke the target API to operate the data of the target user, and then initiates the authorization request to the authorization function network element based on the received authorization indication. Authorization of the target user is introduced in an API invocation procedure, to avoid exposure of user privacy information and reduce a potential security risk in the communication network.

With reference to the second aspect, in some implementations of the second aspect, the authorization indication includes an address of the authorization function network element. That the AEF sends an authorization indication to the API invoker includes: The AEF sends a second API invocation response message to the API invoker, where the second API invocation response message includes the authorization indication.

Based on the foregoing solution, the API invoker may send the authorization request message to the authorization function network element by using the address of the authorization function network element carried in the authorization indication.

With reference to the second aspect, in some implementations of the second aspect, the second API invocation response message is a redirection request message.

Based on the foregoing solution, after receiving the redirection request message, the API invoker determines the address of the authorization function network element based on the authorization indication carried in the redirection request message, and then sends the authorization request message to the authorization function network element. In this implementation, the API invoker may not know a specific meaning of the authorization indication information.

With reference to the second aspect, in some implementations of the second aspect, the authorization indication includes a cause value, and the cause value indicates that authorization of the target user is required for requesting to operate the data of the target user.

Based on the foregoing solution, the API invoker may determine, by using the cause value and the address of the authorization function network element that are carried in the authorization indication, that authorization of the target user needs to be obtained from the authorization function network element, and then send the authorization request message to the authorization function network element. In this implementation, the API invoker knows a specific meaning of the authorization indication information, so that the API invoker requests to obtain authorization of the user more specifically.

With reference to the second aspect, in some implementations of the second aspect, before the AEF sends the authorization indication to the API invoker, the AEF determines that authorization of the target user is required for requesting to operate the data of the target user.

Based on the foregoing solution, when determining that authorization of the target user is required for requesting to operate the data of the target user, the AEF sends the authorization indication to the API invoker, where the authorization indication indicates that authorization of the target user is required for requesting to operate the data of the target user.

With reference to the second aspect, in some implementations of the second aspect, that the AEF determines that authorization of the target user is required for requesting to operate the data of the target user includes: The AEF sends an obtaining request message to a unified data management function network element UDM, where the obtaining request message is used to request to obtain user consent information of the target user. The AEF receives a response message from the UDM. The AEF determines, based on the response message, that authorization of the target user is required for requesting to operate the data of the target user.

Based on the foregoing solution, the AEF may determine, based on the response message of the UDM, that authorization of the target user is required for requesting to operate the data of the target user, and then send the authorization indication to the API invoker, to perform user authorization on the authorization function network element.

With reference to the second aspect, in some implementations of the second aspect, before the AEF sends the obtaining request message to the UDM, the AEF determines that the AEF does not store the user consent information of the target user, where the user consent information indicates that the target user consents to operate the data of the target user.

Based on the foregoing solution, when it is ensured that the AEF does not store the user consent information of the target user locally, the AEF requests the UDM to obtain the user consent information of the target user, so that unnecessary signaling overheads can be avoided, and a quantity of interactions can be reduced.

With reference to the second aspect, in some implementations of the second aspect, the AEF sends a third request message to a common API framework core function network element CCF, where the third request message is used to request to obtain an access policy for the API invoker to invoke the target API, and the third request message includes an identifier of the API invoker and an identifier of the target API. That the AEF determines, based on a determining result, whether to provide the API invoker with permission to access the data of the target user includes: When the API invoker has permission to operate the data of the target user, and the access policy indicates that the API invoker is allowed to invoke the target API, the AEF provides the API invoker with permission to access the data of the target user.

It should be noted that the AEF sends the third request message to the CCF to request to obtain the access policy for the API invoker to invoke the target API, and the API invoker sends the first request message to the CCF to request to obtain the second token for accessing the target API. The two implementations are parallel solutions. Certainly, in this application, the API invoker may alternatively send the first API invocation request message to the AEF after requesting the CCF to obtain the second token, and when determining whether the API has permission to access the target API, the AEF requests the CCF to obtain the access policy for the API invoker to invoke the target API again. In this way, double check of the access policy and the second token can ensure that the API invocation procedure is more secure.

Based on the foregoing solution, the AEF may request the CCF to obtain the access policy for accessing the target API, to determine whether to allow the API invoker to invoke the target API. In addition, when the API invoker has permission to operate the data of the target user, the AEF may determine whether to provide the API invoker with permission to access the data of the target user. Consideration of permission to invoke the target API and permission to operate the data of the target user can reduce reliability of the invocation request of the API invoker, ensure security of the data of the target user, and reduce a potential risk of personal data of the target user in the communication network.

With reference to the second aspect, in some implementations of the second aspect, when the API invoker has permission to operate the data of the target user, the AEF sends a subscription information update message to the unified data management function UDM, where the subscription information update message is used to update the user consent information of the target user, and the user consent information indicates that the target user consents to operate the data of the target user.

Based on the foregoing solution, when the API invoker has permission to operate the data of the target user, the AEF may update subscription information on the UDM, to reduce a quantity of times that the AuF requests RO authorization, and reduce signaling overheads while ensuring security of personal data of the target user.

According to a third aspect, a communication method is provided. The method may be performed by an authorization function network element (authorization function, AuF), or may be performed by a chip or a circuit used in the AuF. This is not limited in this application. For ease of description, the following uses an example in which the method is performed by the AuF for description.

The method includes: The authorization function network element receives an authorization request message from an application programming interface API invoker, where the authorization request message includes an identifier of a target user. The authorization function network element generates a first token with integrity protection when determining that the target user consents to the API invoker operating data of the target user, where the first token indicates that the API invoker has permission to access the data of the target user, and the first token includes an identifier of the target user. The authorization function network element sends an authorization response message to the API invoker, where the authorization response message includes the first token.

According to the solution provided in this application, when determining that the target user consents to the API invoker operating the data of the target user, the authorization function network element provides the API invoker with a token of a finer granularity authorized by a user, and subsequently accesses an AEF by using the token, so that the AEF can authorize the API invoker to access an API and process data of a user. According to the method disclosed in this application, whether the user performs authorization is considered when the data of the user is processed, to avoid exposure of user privacy information, and reduce a potential security risk faced by a network function in a mobile communication network.

With reference to the third aspect, in some implementations of the third aspect, the authorization request message further includes an identifier of a target API and the identifier of the target user. That the authorization function network element generates a first token with integrity protection includes: The authorization function network element generates a claim based on an identifier of the API invoker, the identifier of the target API, and the identifier of the target user. The authorization function network element generates a signature based on the claim. The authorization function network element generates the first token with integrity protection based on the claim and the signature.

Based on the foregoing solution, the authorization function network element generates the first token based on the identifier of the API invoker, the identifier of the target API, and the identifier of the target user that are carried in the authorization request message, and when the user consents to authorize to operate the data of the target user, to ensure integrity, authenticity, and pertinence of the first token, thereby reducing a risk of exposure of user privacy information caused by a subsequent operation on personal data of the user.

With reference to the third aspect, in some implementations of the third aspect, the first token further includes one or more of the following: expiration time; an identifier of the API invoker; an identifier of the target API; or a signer.

Based on the foregoing solution, more claim information is provided in the first token, so that security of this API invocation can be further ensured, and multi-layer assurance can be provided to protect user privacy information from being exposed, thereby helping reduce a network communication risk.

With reference to the third aspect, in some implementations of the third aspect, the authorization request message further includes the identifier of the target API and/or the identifier of the target user.

Based on the foregoing solution, the identifier of the target API and/or the identifier of the target user are/is carried in the authorization request message, so that the invocation request of the API invoker is more specific, and the first token subsequently generated by the authorization function network element has more claim content information. This helps provide a more secure protection measure for the target user in the API invocation procedure, and avoid a risk such as exposure of user personal data.

According to a fourth aspect, a communication method is provided. The method may be performed by a common API framework core function network element (Common API Framework Core Function, CCF), or may be performed by a chip or a circuit used in a CAPIF core function network element. This is not limited in this application. For ease of description, the following uses an example in which the method is performed by the CAPIF core function network element for description.

The method includes: The common application programming interface API framework core function network element CCF receives a second request message from an API invoker, where the second request message is used to request to register the API invoker with the CCF or used by the API invoker to discover a target API. The CCF sends an authorization indication to the API invoker.

Based on the solution provided in this application, the CCF provides the authorization indication for the API invoker, so that the API invoker determines that user authorization is required for requesting to invoke the target API to operate data of a target user, and then initiates an authorization request to an authorization function network element based on the received authorization indication. Authorization of the target user is introduced in an API invocation procedure, to avoid exposure of user privacy information and reduce a potential security risk in a communication network.

With reference to the fourth aspect, in some implementations of the fourth aspect, the authorization indication includes an address of an authorization function network element. That the CCF sends an authorization indication to the API invoker includes: The CCF sends a second response message to the API invoker, where the second response message includes the authorization indication.

Based on the foregoing solution, the API invoker may send an authorization request message to the authorization function network element by using the address of the authorization function network element carried in the authorization indication.

With reference to the fourth aspect, in some implementations of the fourth aspect, the second response message is a redirection request message.

Based on the foregoing solution, after receiving the redirection request message, the API invoker determines the address of the authorization function network element based on the authorization indication carried in the redirection request message, and then sends the authorization request message to the authorization function network element. In this implementation, the API invoker may not know a specific meaning of the authorization indication information.

With reference to the fourth aspect, in some implementations of the fourth aspect, the authorization indication further includes a cause value, and the cause value indicates that authorization of a target user is required for requesting to operate data of the target user.

Based on the foregoing solution, the API invoker may determine, by using the cause value and the address of the authorization function network element that are carried in the authorization indication, that authorization of the target user needs to be obtained from the authorization function network element, and then send the authorization request message to the authorization function network element. In this implementation, the API invoker knows a specific meaning of the authorization indication information, so that the API invoker requests to obtain authorization of the user more specifically.

With reference to the fourth aspect, in some implementations of the fourth aspect, the CCF receives an authorization request message from the API invoker, where the authorization request message includes an identifier of the API invoker, an identifier of the target API, and an identifier of the target user. The CCF sends the authorization request message to the authorization function network element. The CCF receives an authorization response message from the authorization function network element, where the authorization response message includes a first token with integrity protection, the first token indicates that the API invoker has permission to access the data of the target user, and the first token includes an identifier of the target user. The CCF sends the authorization response message to the API invoker.

Based on the foregoing solution, the CCF, as an intermediate node, forwards a message between the AuF and the API invoker, to implement authorization of a finer granularity while reducing interaction signaling between the API invoker and the AuF, that is, authorize the API invoker to access an API and process data of a user.

With reference to the fourth aspect, in some implementations of the fourth aspect, before the CCF sends the authorization request message to the authorization function network element, the CCF determines the address of the authorization function network element based on a preconfigured address list. The CCF sends the authorization request message to the authorization function network element based on the address of the authorization function network element.

Based on the foregoing solution, when determining that authorization of the target user is required for requesting to operate the data of the target user, the CCF may find the address of the authorization function network element corresponding to the target API, and send the authorization request message to the authorization function network element.

With reference to the fourth aspect, in some implementations of the fourth aspect, the CCF receives a first request message from the API invoker, where the first request message is used to request to obtain permission to invoke the target API, and the first request message includes an identifier of the API invoker and an identifier of the target API. The CCF sends a second token to the API invoker, where the second token indicates that the API invoker has permission to invoke the target API, and the second token includes an identifier of the API invoker and an identifier of the target API.

Based on the foregoing solution, the CCF delivers the second token to the API invoker, to indicate that the API invoker has permission to invoke the target API. Further, the API invoker may subsequently carry the first token and the second token when requesting to invoke the target API to operate the data of the target user. In other words, the API invoker may be authorized to have permission to invoke (or access) the target API, and may be authorized to have permission to invoke the target API to operate the data of the target user. This provides two-layer assurance for protecting user privacy security, and reduce a potential communication risk.

With reference to the fourth aspect, in some implementations of the fourth aspect, the CCF receives a third request message from an AEF, where the third request message is used to request to obtain an access policy for the API invoker to invoke the target API, the access policy indicates whether the API invoker is allowed to invoke the target API, and the third request message includes an identifier of the API invoker and an identifier of the target API. The CCF sends the access policy to the AEF.

Based on the foregoing solution, the CCF may send, to the AEF, the access policy for accessing the target API, to indicate whether to allow the API invoker to invoke the target API. Consideration of permission to invoke the target API and permission to operate the data of the target user can reduce reliability of the API invocation request, ensure security of the data of the target user, and reduce a potential risk of personal data of the target user in the communication network.

According to a fifth aspect, a communication method is provided. The method may be performed by an authorization function network element, or may be performed by a chip or a circuit used in the authorization function network element. This is not limited in this application. For ease of description, the following uses an example in which the method is performed by the authorization function network element for description.

The method includes: The authorization function network element receives an authorization request message from an application programming interface API exposing function network element AEF, where the authorization request message includes an identifier of an API invoker and an identifier of a target user. When determining that the target user authorizes the API invoker to operate data of the target user, the authorization function network element sends an authorization obtaining response message to the AEF, where the authorization obtaining response message includes an authorization result, and the authorization result indicates whether the target user authorizes the API invoker to operate the data of the target user.

Based on the solution provided in this application, in an API invocation procedure, authorization of a finer granularity may be implemented without affecting the API invoker, that is, the API invoker is authorized to access an API and process data of a user. The authorization function network element sends the authorization result to the AEF, so that the AEF determines whether the API invoker has permission to operate the data of the target user, thereby avoiding exposure of user privacy information, and reducing a potential security risk faced by a network function in a mobile communication network.

According to a sixth aspect, a communication method is provided. The method may be performed by an API exposing function network element (API exposing function, AEF), or may be performed by a chip or a circuit used in the API exposing function network element. This is not limited in this application. For ease of description, the following uses an example in which the method is performed by the API exposing function network element for description.

The method includes: The application programming interface API exposing function network element AEF sends an authorization request message to an authorization function network element, where the authorization request message includes an identifier of an API invoker and an identifier of a target user. The AEF receives an authorization response message from the authorization function network element, where the authorization response message includes an authorization result, and the authorization result indicates whether the target user authorizes the API invoker to operate data of the target user.

Based on the solution provided in this application, in an API invocation procedure, authorization of a finer granularity may be implemented without affecting the API invoker, that is, the API invoker is authorized to access an API and process data of a user. The AEF receives the authorization result from the authorization function network element, to determine whether the API invoker has permission to operate the data of the target user, thereby avoiding exposure of user privacy information, and reducing a potential security risk faced by a network function in a mobile communication network.

With reference to the sixth aspect, in some implementations of the sixth aspect, before the AEF sends an authorization indication to the API invoker, the AEF determines that authorization of the target user is required for requesting to operate the data of the target user.

For example, the AEF may determine, based on a locally configured API list, that authorization of the target user is required for invoking the target API. Optionally, the API list may be preconfigured by the AEF, or may be configured by another network element for the AEF. This is not specifically limited in this application.

Optionally, the API list may further correspond to an address of the authorization function network element, that is, the AEF obtains the address of the authorization function network element based on the target API.

Based on the foregoing solution, when determining that authorization of the target user is required for requesting to operate the data of the target user, the AEF sends the authorization indication to the API invoker, where the authorization indication indicates that authorization of the target user is required for requesting to operate the data of the target user.

With reference to the sixth aspect, in some implementations of the sixth aspect, that the AEF determines that authorization of the target user is required for requesting to operate the data of the target user includes: The AEF sends an obtaining request message to a unified data management function network element UDM, where the obtaining request message is used to request to obtain user consent information of the target user. The AEF receives a response message from the UDM. The AEF determines, based on the response message, that authorization of the target user is required for requesting to operate the data of the target user.

Optionally, the response message may indicate that the UDM does not store the user consent information of the target user, or may indicate that authorization of the target user is required for requesting to operate the data of the target user.

Based on the foregoing solution, the AEF may determine, based on the response message of the UDM, that authorization of the target user is required for requesting to operate the data of the target user, and then send the authorization indication to the API invoker, to perform user authorization on the authorization function network element.

With reference to the sixth aspect, in some implementations of the sixth aspect, before the AEF sends the obtaining request message to the UDM, the AEF determines that the AEF does not store the user consent information of the target user, where the user consent information indicates that the target user consents to operate the data of the target user.

It should be noted that the AEF does not store the user consent information of the target user, which may be understood as that the AEF does not store a UE context of the target user locally, or may be understood as that the locally stored UE context of the target user does not store the user consent information of the target user.

Based on the foregoing solution, when it is ensured that the AEF does not store the user consent information of the target user locally, the AEF requests the UDM to obtain the user consent information of the target user, so that unnecessary signaling overheads can be avoided, and a quantity of interactions can be reduced.

With reference to the sixth aspect, in some implementations of the sixth aspect, that the AEF sends an authorization request message to an authorization function network element includes: The AEF determines the address of the authorization function network element based on a preconfigured address list. The AEF sends the authorization request message to the authorization function network element based on the address of the authorization function network element.

Based on the foregoing solution, the AEF may find, based on the address list, the address of the authorization function network element corresponding to the target API, and send the authorization request message to the authorization function network element.

With reference to the sixth aspect, in some implementations of the sixth aspect, when the API invoker has permission to operate the data of the target user, the AEF sends a subscription information update message to the unified data management function UDM, where the subscription information update message is used to update the user consent information of the target user, and the user consent information indicates that the target user consents to operate the data of the target user.

For example, the subscription information update message includes one or more of the following: an identifier of the target user; a data processing purpose, where the data processing purpose is obtained based on an API; an identifier of the API invoker; expiration time; or a user consent result.

Based on the foregoing solution, when the API invoker has permission to operate the data of the target user, the AEF may update subscription information on the UDM, to reduce a quantity of times that the AuF requests RO authorization, and when the API invoker is authorized to access an API and process data of a user, reduce signaling overheads while ensuring user data security.

According to a seventh aspect, an API invoker is provided. The network element includes: a processing unit, configured to generate an authorization request message; and a transceiver unit, configured to send the authorization request message to an authorization function network element, where the authorization request message includes an identifier of the API invoker. The transceiver unit is further configured to receive an authorization response message from the authorization function network element, where the authorization response message includes a first token with integrity protection, the first token indicates that the API invoker has permission to access data of a target user, and the first token includes an identifier of the target user. The transceiver unit is further configured to send a first API invocation request message to an API exposing function network element AEF, where the first API invocation request message is used to request to invoke a target API to operate the data of the target user, and the first API invocation request message includes an identifier of the target user and the first token.

The transceiver unit may perform receiving and sending in the first aspect, and the processing unit may perform processing other than receiving and sending in the first aspect.

According to an eighth aspect, an API exposing function network element AEF is provided. The network element includes: a transceiver unit, configured to receive a first API invocation request message from an API invoker, where the first API invocation request message is used to request to invoke a target API to operate data of a target user, the first API invocation request message includes a first token with integrity protection and an identifier of the target user, the first token indicates that the API invoker has permission to access the data of the target user, and the first token includes an identifier of the target user; and a processing unit, configured to determine, based on the first token, whether the API invoker has permission to operate the data of the target user. The processing unit is further configured to determine, by the AEF based on a determining result, whether to provide the API invoker with permission to access the data of the target user.

The transceiver unit may perform receiving and sending in the second aspect or the sixth aspect, and the processing unit may perform processing other than receiving and sending in the second aspect or the sixth aspect.

According to a ninth aspect, an authorization function network element is provided. The network element includes: a transceiver unit, configured to receive an authorization request message from an application programming interface API invoker, where the authorization request message includes an identifier of the API invoker; and a processing unit, configured to generate, by the authorization function network element, a first token with integrity protection when determining that a target user consents to the API invoker operating data of the target user, where the first token indicates that the API invoker has permission to access the data of the target user, and the first token includes an identifier of the target user. The transceiver unit is further configured to send an authorization response message to the API invoker, where the authorization response message includes the first token.

The transceiver unit may perform receiving and sending in the third aspect or the fifth aspect, and the processing unit may perform processing other than receiving and sending in the third aspect or the fifth aspect.

According to a tenth aspect, a CAPIF core function network element is provided. The network element includes: a transceiver unit, configured to receive a second request message from an API invoker, where the second request message is used to request to register the API invoker with a CCF or used by the API invoker to discover a target API. The transceiver unit is further configured to send an authorization indication to the API invoker.

The transceiver unit may perform receiving and sending in the fourth aspect, and the processing unit may perform processing other than receiving and sending in the fourth aspect.

According to an eleventh aspect, a communication apparatus is provided, including a transceiver, a processor, and a memory. The processor is configured to control the transceiver to send and receive a signal. The memory is configured to store a computer program. The processor is configured to invoke the computer program from the memory and run the computer program, so that the communication apparatus performs the method in any one of the first aspect to the sixth aspect and the possible implementations of the first aspect to the sixth aspect.

Optionally, there are one or more processors, and there are one or more memories.

Optionally, the memory may be integrated with the processor, or the memory and the processor are separately disposed.

Optionally, the communication apparatus further includes a transmitter (transmitter) and a receiver (receiver).

According to a twelfth aspect, a communication system is provided, including an API invoker, an authorization function network element, an API exposing function network element, and a CAPIF core function network element.

According to a thirteenth aspect, a computer-readable storage medium is provided. The computer-readable storage medium stores a computer program or code. When the computer program or code is run on a computer, the computer is enabled to perform the method in any one of the first aspect to the sixth aspect and the possible implementations of the first aspect to the sixth aspect.

According to a fourteenth aspect, a chip is provided, including at least one processor. The at least one processor is coupled to a memory, the memory is configured to store a computer program, and the processor is configured to invoke the computer program from the memory and run the computer program, so that a communication apparatus on which a chip system is installed to perform the method in any one of the first aspect to the sixth aspect and the possible implementations of the first aspect to the sixth aspect.

The chip may include an input circuit or interface configured to send information or data and an output circuit or interface configured to receive information or data.

According to a fifteenth aspect, a computer program product is provided. The computer program product includes computer program code. When the computer program code is run on a communication apparatus, the communication apparatus is enabled to perform the method in any one of the first aspect to the sixth aspect and the possible implementations of the first aspect to the sixth aspect.

### BRIEF DESCRIPTION OF DRAWINGS

FIG. 1 is a diagram of a network architecture applicable to this application;
FIG. 2(a) to FIG. 2(d) are another diagram of a network architecture applicable to this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in embodiments of this application may be specifically a network that meets a 3GPP standard requirement, which is referred to as a 3GPP network for short. The 3GPP network usually includes but is not limited to a 5th generation (5th generation, 5G) mobile communication network, a 4th generation (4th generation, 4G) mobile communication network, and other future communication systems such as a (6th generation, 6G) network.

For ease of description, the PLMN or the 5G network is used as an example for description in embodiments of this application.

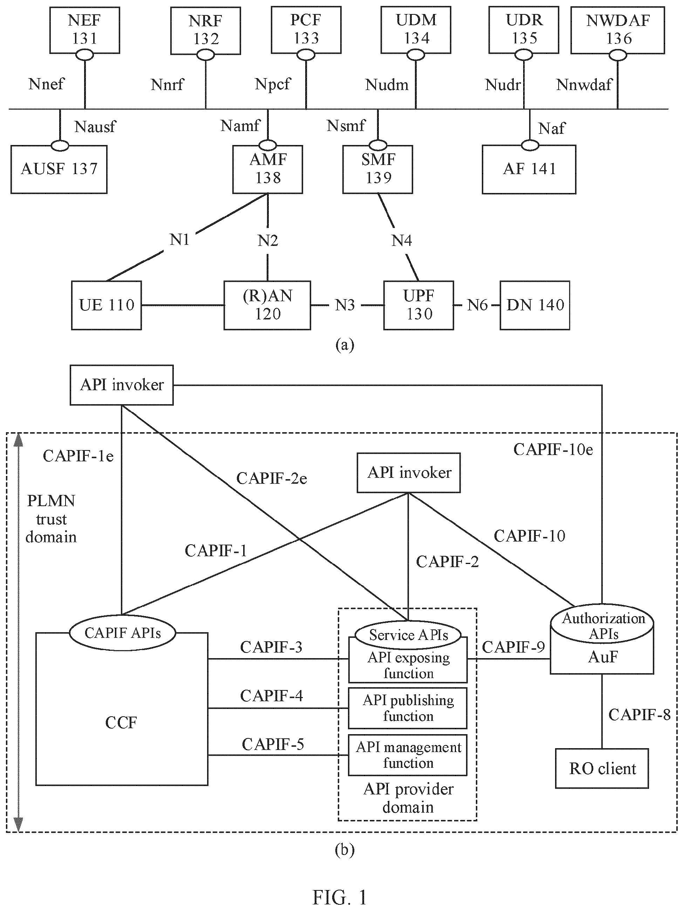

(a) in FIG. 1 is a diagram of a network architecture applicable to this application. A 5G network architecture based on a service-based architecture SBA in a non-roaming scenario defined in a 3GPP standardization process is used as an example. As shown in the figure, the network architecture may include three parts: a terminal device part, a data network (data network, DN) part, and an operator network PLMN part. The following briefly describes a function of a network element of each part.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices through an access network device (which may also be referred to as an access device) in a radio access network (radio access network, RAN) 140. The terminal device 110 may also be referred to as an access terminal, a terminal, a subscriber unit, a subscriber station, a mobile station, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in smart grid (smart grid), a wireless terminal in transportation safety (transportation safety), a wireless terminal in smart city (smart city), a wireless terminal in smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a sub-network of an operator network, and is an implementation system between a service node in the operator network and the terminal device 110. To access the operator network, the terminal device 110 first passes through the (R)AN 120, and then may be connected to the service node in the operator network through the (R)AN 120. An access network device (RAN device) in embodiments of this application is a device that provides a wireless communication function for the terminal device 110, and may also be referred to as a network device. The RAN device includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmission reception point (transmitting and receiving point, TRP), a transmission point (transmitting point, TP), a pico (pico), a mobile switching center, a network device in a future network, or the like. In systems using different radio access technologies, devices with functions of the access network device may have different names. For ease of description, in all embodiments of this application, the foregoing apparatuses that provide a wireless communication function for the terminal device 110 are collectively referred to as an access network device, or referred to as a RAN or an AN for short. It should be understood that a specific type of the access network device is not limited in this specification.

The CN part may include but is not limited to the following network functions (Network Functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may alternatively be deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain an instruction of the control server, transmit collected sensor data to the control server according to the instruction, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by an operator, and is mainly used to enable a third party to use a service provided by a network, support the network in opening a capability, an event, and data analysis of the network, convert security configuration information from an external application to a PLMN and exchange information inside and outside the PLMN, provide an API interface opened by the operator network, and provide interaction between an external server and an internal operator network, and the like.
3. The NRF 132 is a control plane function provided by an operator, and may be configured to maintain real-time information of a network function and a service in a network. For example, the NRF 132 supports network service discovery, maintains services supported by NF configuration data (an NF profile) of NF instances, supports service discovery of a service communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by an operator, and supports a unified policy framework to govern network behavior and provide subscription information related to a policy rule and policy decision for another control function.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted in a transmission process, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that for ease of description, information such as the permanent identifier, the credential, a security context, authentication data (cookie), and a token related to check/authentication and authorization is not limited or distinguished in embodiments of this application.
6. The UDR 135 is a control plane function provided by an operator, and provides a function of storing and obtaining subscription data for a UDM, provides a function of storing and obtaining policy data for a PCF, stores and obtains NF group ID (group ID) information of a user, and the like.
7. The NWDAF 136 is a control plane function provided by an operator. A main function of the NWDAF 136 is to collect data from an NF, an external application function AF, an operations, administration and maintenance (operations, administration and maintenance, OAM) system, and the like, and provide the NF and the AF with NWDAF service registration, data exposure, data analysis, and the like.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by an operator network, and is responsible for access control and mobility management when the terminal device 110 accesses the operator network, for example, including functions such as mobility status management, allocation of a temporary user identity, and user authentication and authorization.
10. The SMF 139 is a control plane network function provided by an operator network, and is responsible for managing a protocol data unit (protocol data unit, PDU) session of the terminal device 110. The PDU session is a channel for transmitting a PDU, and the terminal device and the data network DN 140 need to transmit PDUs to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.
11. The AF 141 is a control plane network function provided by the operator network, and is configured to provide application layer information. The AF 141 may interact with a policy framework by using a network exposure function network element, or directly interact with the policy framework to make a policy decision request. The AF 141 may be located inside or outside the operator network.

It may be understood that the foregoing network elements or functions may be physical entities in a hardware device, software instances running on dedicated hardware, or virtualized functions instantiated on a sharing platform (for example, a cloud platform). In short, an NF may be implemented by hardware or software.

In (a) in FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in the figure are merely examples. During specific implementation, the interface names of the system architecture may alternatively be other names. This is not limited in this application. In addition, names of messages (or signaling) transmitted between the foregoing network elements are merely examples, and do not constitute any limitation on functions of the messages.

For ease of description, in embodiments of this application, network functions (such as the NEF 131, ..., and the SMF 139) are collectively/briefly referred to as an NF. In other words, the NF described below in embodiments of this application may be replaced with any network function. In addition, (a) in FIG. 1 describes only some network functions as an example, and the NF described below is not limited to the network functions shown in (a) in FIG. 1.

It should be understood that the foregoing network architecture applied to embodiments of this application is merely a network architecture described from a perspective of a service-based architecture, and a network architecture applicable to embodiments of this application is not limited thereto. Any network architecture that can implement functions of the foregoing network elements is applicable to embodiments of this application.

It should be further understood that the AMF, the SMF, the UPF, the NEF, the AUSF, the NRF, the PCF, and the UDM shown in the figure may be understood as network elements configured to implement different functions in a core network, for example, may be combined as required to form a network slice. These network elements of the core network may be independent devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, some or all of the foregoing network elements may still use terms in 5G, or may use other names.

(b) in FIG. 1 is another diagram of a network architecture applicable to this application, for example, a CAPIF architecture. As shown in the figure, the network architecture includes an API invoker, a CCF, an AEF, an AuF, a resource owner client (resource owner client), a resource owner (resource owner, RO), and the like. The following briefly describes functions of each network element.
1. API invoker (API Invoker): is usually provided by a third-party application provider that signs a service agreement with a PLMN operator. The API invoker may be an AF or a UE. The API invoker is mainly configured to: provide an identity of the API invoker and other information required for authentication on the API invoker, to support authentication; support mutual authentication with the CAPIF; obtain authorization before accessing a service API; discover service API information; and invoke the service API.
2. CCF: is mainly configured to: authenticate the API invoker based on an identity and other information required for authentication on the API invoker; support mutual authentication with the API invoker; provide authorization for the API invoker before accessing a service API; publish and store service API information, and support discovery of service API information; control service API access according to a policy configured by a PLMN operator; store a log invoked by the service API and provide the log invoked by the service API for an authorization entity; perform charging based on the log invoked by the service API; monitor invocation of the service API; add a new API invoker and delete the API invoker; store policy configurations related to the CAPIF and the service API; audit an access log (for example, abuse detection); use another CAPIF core function to publish and discover the service API information during CAPIF interconnection.
3. AEF: The AEF is a provider of a service API and a service communication entry between the service API and the API invoker. In a 3GPP network, the AEF may be an NEF. The AEF is mainly configured to: authenticate the API invoker based on an identity and other information that are required for authentication on the API invoker and that are provided by a CAPIF core function; check authorization provided by the CAPIF core function; and record service API invocation of the CAPIF core function.
4. AuF: is configured to obtain user authorization. The AuF may provide an access token for a client after successfully authenticating a resource owner, to provide user authorization.
5. Resource owner client: is a client that initiates a request, which is usually a browser, an editor, a web crawler, or another tool used by the resource owner.
6. RO: is an entity that can grant access permission to protected resources. The resource owner may be an individual. In the application, the resource owner may be a 3GPP subscriber.

For ease of understanding of embodiments of this application, terms or technologies in this application are first described briefly.
1. User consent information: The user consent information in this application indicates whether a user consents to some data operations. Specifically, the user consent information includes two parts: a data processing purpose and a user consent result, where the data processing purpose indicates a purpose of a data operation.

For example, the purpose of the data operation includes but is not limited to model training, data analytics, data sharing, non-terrestrial network location query, RAN data analytics, or RAN data model training. The data processing purpose may indicate that the purpose of the data operation is model training, data analytics, or data sharing.

Optionally, the data processing purpose may also be referred to as a data use purpose, a data obtaining purpose, or the like. A name of information (or a message) in this application is not limited, provided that a corresponding function can be implemented.

The user consent result indicates whether to consent to the purpose of the data operation. For example, granted represents consent, and not granted represents dissent. For another example, 1 represents consent, and 0 represents dissent.

For example, the user consent information in this application may further include a network identifier. The network identifier identifies a network that supports the user in consenting or not consenting to the purpose of the data operation. For example, the network identifier may be a public land mobile network PLMN ID.

### 2. Integrity protection (integrity protection)

Integrity protection is to use a physical means or a cryptographic method to ensure that information is not tampered with or is not modified without authorization during generation, transmission, and storage of the information, and subsequent operations.

There may be a plurality of manners of performing integrity protection on information by using the cryptographic method. For example, a private key (private key) in an asymmetric key is used to perform a digital signature on information, a one-way function (for example, a hash (Hash) function) is used to generate a message authentication code (message authentication code, MAC) by using a symmetric key (a shared key) and information as input parameters, or a one-way function (for example, a hash (Hash) function) rather than a key is used independently to generate a hash value (Hash value) by using information as an input parameter.

In the existing 3GPP architecture, the AF may request to obtain some 3GPP information processed by the 3GPP network. The information may include processing of network data or processing of user data. Especially, the AF needs to obtain user authorization before processing the user data. For example, the AF may request 3GPP to send location information of the user. If authorization of the user is not obtained, the user privacy information may be exposed. Therefore, a method is urgently needed to enable the AF to obtain authorization of the user before requesting the 3GPP network to process the user data.

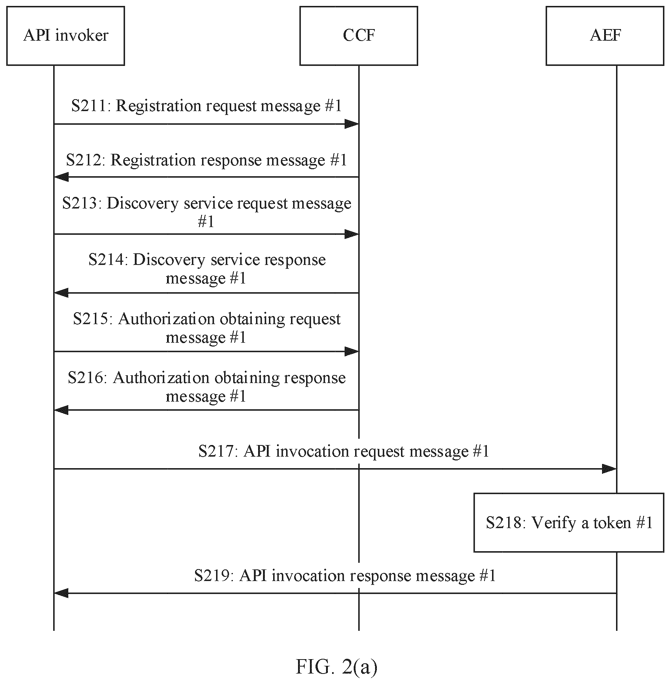

With reference to FIG. 2(a) to FIG. 2(d), the following describes a solution in which an API invoker invokes a specific API from an AEF.

FIG. 2(a) is a procedure in which a CAPIF authorizes the API invoker to invoke a specific API from the AEF based on a CCF of Oauth 2.0 client_credential in TLS with OAuth token. The procedure specifically includes the following multiple steps.

S211: The API invoker (API Invoker) sends a registration request message #1 to the CCF.

Correspondingly, the CCF receives the registration request message #1 from the API invoker.

The registration request message #1 includes registration information and a registration API.

For example, the registration information includes information about the API invoker, for example, registration details and a registration requirement. The registration API includes a list of APIs that need to be registered.

S212: The CCF sends a registration response message #1 to the API invoker.

Correspondingly, the API invoker receives the registration response message #1 from the CCF.

The registration response message #1 includes a registration status, registered information, and service API information.

For example, the registration status indicates that a registration result is success or failure. The registered information includes an API invoker ID and an authorization and authentication method. The API invoker ID is allocated by the CCF to the API invoker, the authorization and authentication method is used to indicate which authorization and authentication method is used, and the authorization and authentication method includes TLS-PSK, PKI, and TLS with OAuth token. In this implementation, it is assumed that the authorization and authentication method is TLS with OAuth token. The service API information indicates information about a registered API, and includes one or more of the following: a service API name, an AEF location, an IP address or a domain name, a port number, a protocol, or the like.

S213: The API invoker sends a discovery service request message #1 to the CCF.

Correspondingly, the CCF receives the discovery service request message #1 from the API invoker.

The discovery service request message #1 includes an API invoker ID and request information.

For example, the request information includes a criterion for discovering some APIs, for example, a preferred AEF location or a protocol.

S214: The CCF sends a discovery service response message #1 to the API invoker.

Correspondingly, the API invoker receives the discovery service response message #1 from the CCF.

The discovery service response message #1 includes service API information, the service API information responds to an API requested in step S213, and an information element of the service API information is consistent with an information element in step S213.

S215: The API invoker sends an authorization obtaining request message #1 to the CCF.

Correspondingly, the CCF receives the authorization obtaining request message #1 from the API invoker.

The authorization obtaining request message #1 includes an API Invoker ID, a service API name, and an authorization mode, and the authorization mode indicates an Oauth manner in which a client credential (client_credential) mode is used.

It should be understood that, because the authorization and authentication method selected by the CCF in step S212 is TLS with OAuth token, the API invoker needs to send the authorization obtaining request message #1 to the CCF.

S216: The CCF sends an authorization obtaining response message #1 to the API invoker.

Correspondingly, the API invoker receives the authorization obtaining response message #1 from the CCF.

The authorization obtaining response message #1 includes a token #1, and the token #1 includes a claim and a signature. The claim includes the following content: expiration time, an API invoker ID, and a service API ID. The signature is a digital signature of the CCF for the token #1.

For example, after determining, according to a local policy, that the API invoker is authorized to access an API name, the CCF sends the authorization obtaining response message #1 to the API invoker.

S217: The API invoker sends an API invocation request message #1 to the AEF.

Correspondingly, the AEF receives the API invocation request message #1 from the API invoker.

The API invocation request message #1 includes an API invoker ID, a service API ID, and the token #1.

S218: The AEF checks the token #1 based on the API invocation request message #1.

A specific implementation of checking the token #1 includes the following check content:
(1) The AEF checks the signature of the token #1. The AEF checks the signature of the token #1 based on a preconfigured credential (such as, a certificate) of the CCF.
(2) The AEF checks the claim of the token #1: The AEF determines whether the API invoker ID in the claim of the token #1 is consistent with the API invoker ID in the message; or the AEF determines whether the service API ID in the claim of the token #1 is consistent with the requested service API ID in the message; or the AEF determines, based on the expiration time, whether the current token #1 has expired.

S219: The AEF sends an API invocation response message #1 to the API invoker.

Correspondingly, the API invoker receives the invocation response message #1 from the AEF.

For example, if the check in step S218 succeeds, the AEF consents to the API invocation request, and sends the invocation response message #1 to the API invoker. Otherwise, if the check fails, the AEF rejects the API invocation request.

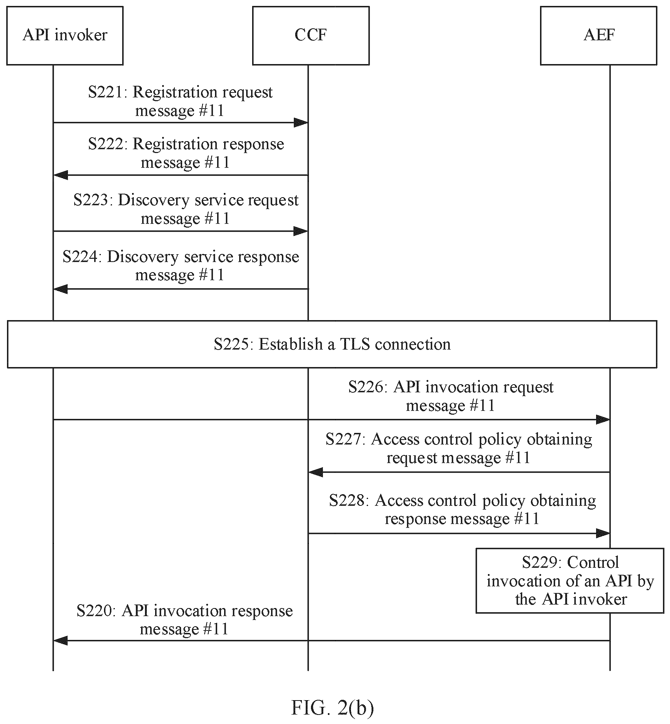

FIG. 2(b) is a procedure in which a CAPIF authorizes the API invoker to invoke a specific API from the AEF based on a CCF of an access control policy in TLS-PSK or PKI. The procedure specifically includes the following multiple steps.

S221: The API invoker (API Invoker) sends a registration request message #11 to the CCF.

Correspondingly, the CCF receives the registration request message #11 from the API invoker.

The registration request message #11 includes registration information and a registration API.

S222: The CCF sends a registration response message #11 to the API invoker.

Correspondingly, the API invoker receives the registration response message #11 from the CCF.

The registration response message #11 includes a registration status, registered information, and service API information.

In this implementation, it is assumed that an authorization and authentication method is TLS-PSK or PKI.

S223: The API invoker sends a discovery service request message #11 to the CCF.

Correspondingly, the CCF receives the discovery service request message #11 from the API invoker.

The discovery service request message #11 includes an API invoker ID and request information.

S224: The CCF sends a discovery service response message #11 to the API invoker.

Correspondingly, the API invoker receives the discovery service response message #11 from the CCF.

It should be noted that specific implementations of steps S221 to S224 are similar to those of steps S211 to S214. For brevity, details are not described herein again.

S225: The API invoker establishes a transport layer security (transport layer security, TLS) connection with the CCF.

It should be understood that, because the authorization and authentication method selected by the CCF in step S222 is TLS-PSK or PKI, the API invoker needs to establish the TLS connection to the CCF in different manners. A specific implementation of establishing the TLS connection is not specifically limited in this application.

S226: The API invoker sends an API invocation request message #11 to the AEF.

Correspondingly, the AEF receives the API invocation request message #11 from the API invoker.

The API invocation request message #1 includes an API invoker ID and a service API ID.

S227: The AEF sends an access control policy obtaining request message #11 to the CCF.

Correspondingly, the CCF receives the access control policy obtaining request message #11 from the AEF.

The access control policy obtaining request message #11 includes an AEF ID, an API invoker ID, and a service API ID.

S228: The CCF sends an access control policy obtaining response message #11 to the AEF.

Correspondingly, the AEF receives the access control policy obtaining response message #11 from the CCF.

The access control policy obtaining response message #11 includes access control policy information.

For example, the access control policy information includes an allowed access policy for the API invoker ID to request service API ID, for example, a maximum quantity of invoking times, a quantity of allowed invoking times per second, and allowed invoking time.

S229: The AEF controls invocation of the API by the API invoker.

For example, the AEF controls, according to the received access control policy, invocation of the API by the API invoker.

S220: The AEF sends an API invocation response message #11 to the API invoker.

Correspondingly, the API invoker receives the API invocation response message #11 from the AEF.

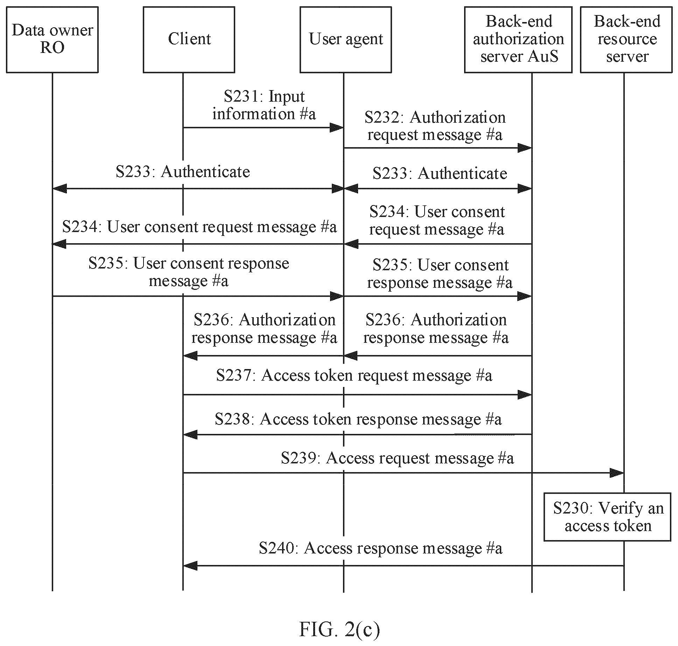

FIG. 2(c) is a common authorization procedure in an OAuth 2.0-based authorization code (authorization code grant) mode. The procedure specifically includes the following multiple steps.

S231: A client (Client) inputs information #a to a user agent (User agent).

Correspondingly, the user agent receives the information #a from the client.

The information #a includes an authorization server (authorization server, AuS) uniform resource locator (Uniform Resource Locator, URL), a redirect URL, a scope (scope), and a response type (response type).

For example, a user selects to log in to an app 1 by using an app 2, and clicks to log in. Therefore, the AuS URL sent by the client to the user agent is a URL of an AuS of the app 2, the redirect URL is a URL of the app 1, and the scope is an authorization scope, for example, the user is authorized to use resources such as an avatar and a mobile number, and the response type is code, that is, the authorization code mode.

S232: The user agent sends an authorization request message #a to an AuS.

Correspondingly, the AuS receives the authorization request message #a from the user agent.

The authorization request message #a includes a redirect URL, a scope, and a response type. The response type is code.

It should be noted that the user agent may determine an address of the AuS based on an AuS URL.

S233: The AuS performs authentication with a resource owner RO.

Optionally, the AuS performs authentication with the RO by using the user agent.

Optionally, if the AuS has performed authentication with the RO, and the AuS still stores information indicating that the authentication succeeds, the AuS may skip the authentication process with the RO.

Correspondingly, if the user agent is a browser, the AuS returns an authentication request webpage to the user agent, and the user agent displays the authentication request webpage to the RO.

Correspondingly, if the user agent is an application client, the AuS returns an authentication request prompt message to the user agent, and the user agent displays the authentication request message to the RO.

For example, the AuS deployed on the app 2 requires the user to enter a user name and a password. If the user agent has related authentication information, this step may be omitted.

S234: The AuS sends a user consent request message #a to the user agent, and the user agent sends the user consent request message #a to the RO.

Correspondingly, the RO receives the user consent request message #a from the user agent, and the user agent receives the user consent request message #a from the AuS.

S235: The RO sends a user consent response message #a to the user agent, and the user agent sends the user consent response message #a to the AuS.

Correspondingly, the AuS receives the user consent response message #a from the user agent, and the user agent receives the user consent response message #a from the RO.

For example, after the user clicks Consent or Dissent, the user agent returns authorization response content to the AuS, and therefore the AuS obtains authorization of the user.

S236: The AuS sends an authorization response message #a to the user agent, and the user agent sends the authorization response message #a to the client.

Correspondingly, the client receives the authorization response message #a from the user agent, and the user agent receives the authorization response message #a from the AuS.

The authorization response message #a includes a redirect URL and a code.

For example, after obtaining authorization of the user, the AuS generates an authorization code (code), and sends the authorization response message #a to the user agent.

S237: The client sends an access token request message #a to the AuS by using a back-end application.

The AuS receives the access token request message #a from the client by using the backend application.

The access token request message #a is used to request to obtain a token. The access token request message #a includes a code, authorization type="authorization code (authorization code)", a client ID, and a redirect URL.

S238: The AuS returns an access token (access token) response message #a to the client.

Correspondingly, the client receives the access token response message #a returned by the AuS.

The access token response message #a includes an access token.

S239: The client sends an access request message #a to the RO server by using a back-end application.

Correspondingly, the RO server receives the access request message #a from the client by using the back-end application.

The access request message #a includes an access token.

S230: The RO server checks the access token.

S240: The RO server returns an access response message #a to the client.

Correspondingly, the client receives the access response message #a from the RO server.

The access response message #a includes a resource requested by the client.

For example, the client displays a webpage to the user based on the redirect URL and the returned resource. In this case, the user can see the web page of the app 1 that is logged in to by using the avatar of the app 2 of the user.

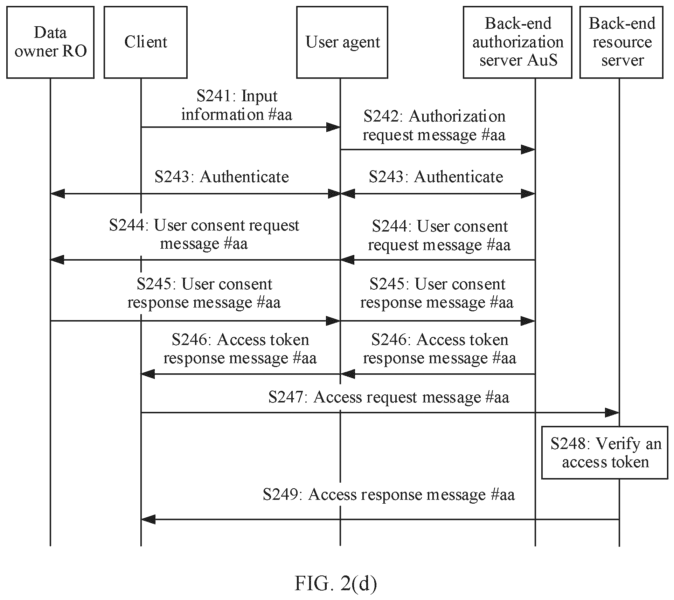

FIG. 2(d) is a common authorization procedure in an OAuth 2.0-based implicit (implicit grant) mode. The authorization procedure is similar to the authorization code mode and is applicable to a scenario in which a client is only a front-end application. The procedure specifically includes the following multiple steps.

S241: The client inputs information #aa to a user agent.

Correspondingly, the user agent receives the information #aa from the client.

The information #aa includes an AuS URL, a redirect URL, a scope, and a response type.

For example, a user selects to log in to an app 1 by using an app 2, and clicks to log in. Therefore, the AuS URL sent by the client to the user agent is a URL of an AuS of the app 2, the redirect URL is a URL of the app 1, and the scope is an authorization scope, for example, the user is authorized to use resources such as an avatar and a mobile number, and the response type is token.

S242: The user agent sends an authorization request message #aa to an AuS.

Correspondingly, the AuS receives the authorization request message #aa from the user agent.

The authorization request message #aa includes a redirect URL, a scope, and a response type. The response type is token.

S243: The AuS performs authentication with a resource owner RO.

Correspondingly, the AuS returns an authorization request webpage to the user agent, and the user agent displays the authorization request webpage to the RO.

S244: The AuS sends a user consent request message #aa to the user agent, and the user agent sends the user consent request message #aa to the RO.

Correspondingly, the RO receives the user consent request message #aa from the user agent, and the user agent receives the user consent request message #aa from the AuS.

S245: The RO sends a user consent response message #aa to the user agent, and the user agent sends the user consent response message #aa to the AuS.

Correspondingly, the AuS receives the user consent response message #aa from the user agent, and the user agent receives the user consent response message #aa from the RO.

For example, after the user clicks Consent or Dissent, the user agent returns authorization response content to the AuS, and therefore the AuS obtains authorization of the user.

It should be noted that specific implementations of steps S242 to S245 are similar to those of steps S232 to S235. For brevity, details are not described herein again.

S246: The AuS sends an access token response message #aa to the user agent, and the user agent sends the token response message #aa to the client.

Correspondingly, the client receives the token response message #aa from the user agent, and the user agent receives the token response message #aa from the AuS.

The token response message #aa includes an access token.

S247: The client sends an access request message #aa to the RO server by using a back-end application.

Correspondingly, the RO server receives the access request message #aa from the client by using the back-end application.

The access request message #a includes an access token.

S248: The RO server checks the access token.

S249: The RO server returns an access response message #aa to the client.

Correspondingly, the client receives the access response message #aa from the RO server.

It should be noted that specific implementations of steps S247 to S249 are similar to those of steps S239, S230, and S240. For brevity, details are not described herein again.

In conclusion, the current API invoker can be authorized to access a specific API, but the API invoker cannot be authorized to access data of a specific user of the specific API. The user is not involved. That is, if the AF does not obtain authorization of the user, user privacy information may be exposed when the AF requests the 3GPP network to process the user data.

In view of this, this application provides a communication method and a communication apparatus. An API invoker actively obtains a token of a finer granularity authorized by a user (the token includes a user identifier), and accesses an AEF by using the token, so that the AEF can authorize the API invoker to access an API and process data of a user. The method provided in this application can avoid user privacy exposure and reduce a potential security risk faced by a network function in a mobile communication network.

For ease of understanding of embodiments of this application, the following descriptions are provided.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" indicates one or more, "a plurality of" indicates two or more. The term "and/or" describes an association relationship between associated objects, and indicates that three relationships may exist. For example, A and/or B may indicate the following three cases: Only A exists, both A and B exist, and only B exists. A and B may be singular or plural. In descriptions of this application, the character "/" usually indicates an "or" relationship between associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

Third, in this application, "first", "second", and various numbers (for example, #1 and #2) indicate differentiation for ease of description, but are not intended to limit the scope of embodiments of this application, for example, are for distinguishing different messages or the like rather than describing a particular order or sequence. It should be understood that objects described in such a way are interchangeable in an appropriate circumstance, so that a solution other than embodiments of this application can be described.

Fourth, in this application, descriptions such as "when...", "in a case of...", and "if" all mean that a device performs corresponding processing in an objective case, are not intended to limit time, do not require the device to perform a determining action during implementation, and do not mean that there is another limitation.

Fifth, in this application, terms "include", "contain" and any other variants thereof are intended to cover non-exclusive inclusion. For example, a process, method, system, product, or device that includes a series of steps or units is not necessarily limited to those steps or units that are clearly listed, but may include other steps or units that are not explicitly listed or are inherent to such a process, method, product, or device.

Sixth, in this application, "indicate" may include a direct indication and an indirect indication. When a piece of indication information indicates A, the indication information may directly indicate A or indirectly indicate A, but it does not indicate that the indication information definitely carries A.

Indication manners in this application should be understood as covering various methods that can enable a to-be-indicated party to learn of to-be-indicated information. The to-be-indicated information may be sent as a whole, or may be divided into a plurality of pieces of sub-information for separate sending. **In** addition, sending periodicities and/or sending occasions of the sub-information may be the same or may be different. A specific sending method is not limited in this application.

The term "indication information" in this application may be an explicit indication, namely, a direct indication using signaling or an indication obtained based on a parameter indicated by signaling in combination with another rule or another parameter or obtained through deduction; or may be an implicit indication, namely, an indication obtained based on a rule, a relationship, or another parameter or obtained through deduction. This is not specifically limited in this application.

Seventh, in this application, a "protocol" may mean a standard protocol in the communication field, for example, may include a 5G protocol, an NR protocol, and a related protocol applied to a future communication system. This is not limited in this application. "Pre-configuration" may include pre-definition, for example, definition in a protocol. "Pre-definition" may be implemented by pre-storing corresponding code or a corresponding table in a device; or implemented in another manner of indicating related information. A specific implementation of the "pre-definition" is not limited in this application.

Eighth, in this application, "storage" may mean storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the storage may be a storage medium in any form. This is not limited in this application.

Ninth, in this application, "communication" may also be described as "data communication", "information communication", "data processing", or the like. "Communication" includes "sending" and "receiving". This is not limited in this application.

Tenth, in this application, "operating data of a target user" and "accessing data of a target user" may indicate a same meaning, that is, an **API** invoker has permission to use the data of the target user. Similarly, an "authorization type" and an "authorization mode" may be replaced, and indicate a manner for authorization, for example, an authorization code mode or an implicit mode. A specific name is not specifically limited in this application.

The technical solutions provided in this application are described below in detail with reference to the accompanying drawings.

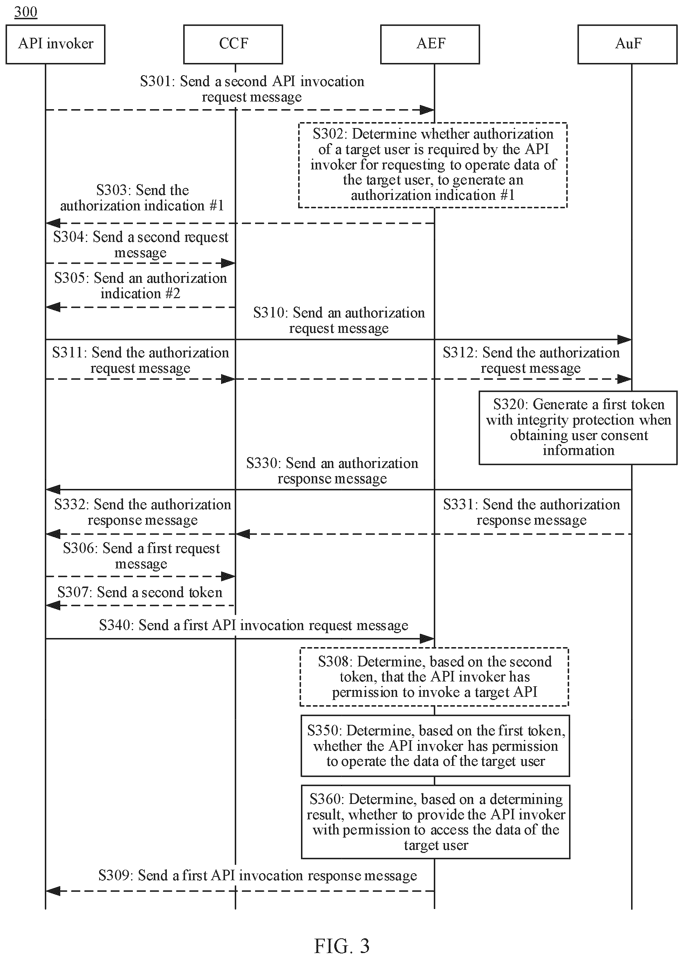

FIG. 3 is a schematic flowchart of a communication method 300 according to an embodiment of this application. As shown in FIG. 3, the method includes the following multiple steps.

S310: An API invoker (API Invoker) sends an authorization request message to an authorization function network element (for example, an AuF).

Correspondingly, the authorization function network element receives the authorization request message from the API invoker.

The authorization request message is used to request to obtain authorization of a target user, and the authorization request message includes an identifier of the target user.

Optionally, the authorization request message further includes an identifier of a target API (Service API ID) and/or an identifier of the API invoker (API Invoker ID).

It should be understood that the API invoker ID identifies the API invoker.

For example, the API invoker may be UE, or may be an AF. This is not specifically limited in this application.

It should be noted that the target user may be understood as a resource owner RO, and the two terms may be used interchangeably. This is not specifically limited in this application.

For example, the identifier of the target user identifies the user, for example, including but not limited to a subscription permanent identifier (subscription permanent identifier, SUPI), a subscription concealed identifier (subscription concealed identifier, SUCI), a generic public subscription identifier (generic public subscription identifier, GPSI), a permanent equipment identifier (permanent equipment identifier, PEI), or a mobile subscriber international ISDN/PSTN number (MSISDN) of the user. ISDN is an integrated services digital network (integrated service digital Network), and PSTN is a public switched telephone network (public switched telephone network). The MSISDN may be understood as an identity that can be disclosed externally by the user, for example, a phone number of the user.

It should be understood that the target API indicates an API that needs to be authorized. The service API ID indicates an identifier of an API that the API invoker expects to invoke, and the API indicates a specific operation manner for personal data of the user, for example, collection, reading, analysis, and sharing.

For example, the service API ID may include but is not limited to: messages about location (Nnef_Location), get (Nnef_UEIdentifier_Get), and analytics subscription (Nnwdaf_AnalyticsSubscription_Subscribe).

For example, a server invokes an API, for example, Nnef_UEIdentifier_Get, for requesting a UE identifier from an AEF by using an API invocation request message #A, where input user information is set to an IP address or a domain name of UE, and an AF ID is set to an ID of the discussed server, and the action represents that the server requests to obtain identification information of a user (UE) corresponding to the IP address or the domain name. In this case, the API invocation request message #A indicates that the server performs a reading operation on personal data (that is, identity information) of the user.

Optionally, the authorization request message further includes a response type and/or scope indication information. The response type indicates a current authorization mode. For example, code indicates an authorization code mode, and token indicates an implicit mode. The scope indication information indicates an authorization scope, for example, may include a service API ID and an identifier of the target user.

For example, the authorization request message may be an OAuth2.0 authorization request message.

In a possible implementation, the API invoker sends the authorization request message to the authorization function network element based on an authorization indication.

The authorization indication indicates that authorization of the target user is required for requesting to operate data of the target user.

By way of example, and not limitation, the authorization indication may be from the AEF. That is, before the API invoker sends the authorization request message to the authorization function network element, the method further includes S301 to S303.

S301: The API invoker sends a second API invocation request message to the AEF.

Correspondingly, the AEF receives the second API invocation request message from the API invoker.

The second API invocation request message is used to request to invoke the target API to operate the data of the target user, and the second API invocation request message includes an identifier of the target user.

Optionally, the second API invocation request message further includes an identifier of the target API and/or an identifier of the API invoker.

Optionally, the second API invocation request message may carry information about the target API.

For example, the second API invocation request message may be a service API invocation request message.

S302: The AEF determines that authorization of the target user is required for requesting to operate the data of the target user.

In an example, the AEF determines that user consent information of the target user is not stored locally, where the user consent information indicates that the target user consents to operate the data of the target user.

For example, the AEF may determine, based on a locally configured API list, that authorization of the target user is required for invoking the target API. All APIs in the API list are APIs that require user consent. Optionally, the API list may be preconfigured by the AEF, or may be configured by another network element for the AEF. This is not specifically limited in this application.

It should be noted that the AEF does not store the user consent information of the target user, which may be understood as that the AEF does not store a UE context of the target user locally, or may be understood as that the locally stored UE context of the target user does not store the user consent information of the target user.

Optionally, the API list may further correspond to an address of the authorization function network element, that is, the AEF obtains the address of the authorization function network element based on the target API, so that the AEF can subsequently request authorization of the target user from the AuF.

Optionally, after determining that the user consent information of the target user is not locally obtained, the AEF may send an obtaining request message to a UDM, to reduce unnecessary signaling overheads.

It should be understood that the user consent information includes a data processing purpose and a user consent result. The data processing purpose indicates a purpose of operating personal data of the user, for example, including model training, data analytics, and data sharing. The user consent result indicates whether the user consents to the purpose of using the data. For example, granted represents consent, and not granted represents dissent. A user identifier 2 is converted from a user identifier 1, and also represents the target user UE, but is converted for interaction between different network elements.

Optionally, if the AEF has the user consent information of the UE, and the user consent information indicates that the UE consents to the API invoker invoking the service API to operate the personal data of the user, the AEF may directly perform step S309.

Step 303: The AEF sends authorization indication #1 to the API invoker.

Correspondingly, the API invoker receives the authorization indication #1 from the AEF.

The authorization indication #1 includes the address of the authorization function network element.

For example, the authorization indication #1 may include one or more of the following:
(1) Explicit indication, that is, the authorization indication #1 indicates the API invoker to determine the address of the AuF and request the AuF to obtain authorization of the user. For example, a bit "1" is carried in an authorization indication #1 to indicate that authorization of the user is required by the API invoker for operating the personal data of the user.
(2) the address of the AuF (for example, IP address or domain name). The address of the AuF may be preconfigured on the AEF. For example, each API in an API list locally preconfigured by the AEF corresponds to one address of an AuF, and the AEF may determine, based on the service API ID, the address of the AuF that the API invoker needs to search for.
(3) Authorization mode: indicates a specific authorization method, for example, an OAuth 2.0-based authorization code mode or implicit mode.
(4) Cause value (cause value): indicates that authorization of the target user is required for requesting to operate the data of the target user. For example, the cause value may be a cause #1, and indicates that the API invoker needs to obtain authorization of the target user before operating the personal data of the target user.

In an example, the AEF sends a second API invocation response message to the API invoker, where the second API invocation response message includes the authorization indication #1.

Optionally, the second API invocation response message further includes an identifier of the target API and/or an identifier of the target user. The service API ID indicates an API that needs to be authorized, and the identifier of the target user indicates a target user that needs to be authorized.

Optionally, the second API invocation response message is a redirection request message. For example, the redirection request message #A may be an HTTP message whose status code is 302.

By way of example, and not limitation, the authorization indication may be from a CCF. That is, before the API invoker sends the authorization request message to the authorization function network element, the method further includes S304 and S305.

S304: The API invoker sends a second request message to the CCF.

Correspondingly, the CCF receives the second request message from the API invoker.

The second request message is used to request to register the API invoker with the CCF or is used by the API invoker to discover the API.

For example, the second request message may be a registration request message or a discovery service request message. For example, the second request message may be an onboard service request message or a discovery service request message.

S305: The CCF sends an authorization indication #2 to the API invoker.

Correspondingly, the API invoker receives the authorization indication #2 from the CCF.

The authorization indication #2 includes the address of the authorization function network element.

In an example, the CCF sends a second response message to the API invoker (that is, an example of the second API response message), where the second response message includes the authorization indication #2.

Optionally, the second response message further includes an identifier of the target API and/or an identifier of the target user.

Optionally, the second response message is a registration response message or a discovery service response message. For example, the second response message may be an onboard service response message or a discovery service response message.

Optionally, the second API invocation response message is a redirection request message.

For example, the redirection request message may be an HTTP message whose status code is 302. For example, if the redirection request message requires the API invoker to perform temporary redirection (moved temporarily), the API invoker needs to continue to send a request to the address of the AuF.

For example, the authorization indication #2 may include one or more of the following:
(1) Explicit indication, that is, the authorization indication #2 indicates the API invoker to determine the address of the AuF and request the AuF to obtain authorization of the user. For example, a bit "1" is carried in the authorization indication #2 to indicate that authorization of the user is required by the API invoker for operating the personal data of the user.
(2) the address of the AuF (for example, IP address or domain name). The address of the AuF may be preconfigured on the AEF. For example, each API in an API list locally preconfigured by the AEF corresponds to one address of an AuF, and the AEF may determine, based on the service API ID, the address of the AuF that the API invoker needs to search for.
(3) Authorization mode: indicates a specific authorization method, for example, an OAuth 2.0-based authorization code mode or implicit mode.
(4) Cause value: indicates that authorization of the target user is required for requesting to operate the data of the target user.

For another example, the authorization indication #2 includes a cause value, where the cause value indicates that authorization of the target user is required for requesting to operate the data of the target user.

Optionally, the second response message further includes a service API ID and/or an identifier of the target user. The service API ID indicates an API that needs to be authorized, and the identifier of the target user indicates a target user that needs to be authorized.

Optionally, the second response message is a redirection request message. For example, the redirection request message may be an HTTP message whose status code is 302.

Therefore, based on the authorization indication #1 in step S303 or the authorization indication #2 in step S305, the API invoker may determine the address of the AuF, and send the authorization request message to the AuF.

For example, if the authorization indication includes the explicit indication (1), the API invoker may determine, based on a locally preconfigured AuF address list, the address of the AuF corresponding to the service API ID, and request to obtain authorization of the user from the AuF. For another example, if the authorization indication includes the address of the AuF (2), the API invoker may directly send the authorization request message #A to the AuF based on the address of the AuF.

Optionally, the API invoker may determine the response type based on the authorization mode (3) in the authorization indication #1 or the authorization indication #2. The response type may be carried in the authorization request message. For example, if the authorization mode is the OAuth 2.0-based authorization code mode, the response type is code; or if the authorization mode is the OAuth 2.0-based implicit mode, the response type is token.

Optionally, the API invoker determines the address of the authorization function network element based on the cause value (4) in the authorization indication #1 or the authorization indication #2. Further, the API invoker sends the authorization request message to the authorization function network element based on the address of the authorization function network element.

Optionally, the API invoker obtains the address of the authorization function network element from the configured address list based on the cause value in the authorization indication #1 or the authorization indication #2. For example, the API invoker determines, by using the cause value, for example, the cause #1, that authorization of the target user needs to be obtained for requesting to operate the personal data of the target user, and then finds the corresponding address of the AuF based on the address list, or authorizes the AuF based on the address of the AuF sent by the AEF.

Optionally, before the API invoker sends the authorization request message to the authorization function network element based on the authorization indication, the API invoker determines the response type based on the authorization type.

In this implementation, the API invoker determines, based on the authorization indication, to request the AuF to obtain authorization of the user, so that user authorization control oriented to a specific API can be implemented, thereby improving flexibility of user authorization.

Optionally, the CCF may act as an intermediate node to perform forwarding and obtain user authorization from the AuF. In this implementation, the API invoker does not need to send the authorization request message to the AuF based on the authorization indication, so that signaling overheads of the API can be reduced.

S311: The API invoker sends the authorization request message to the CCF.

Correspondingly, the CCF receives the authorization request message from the API invoker.

Based on the authorization indication #1 in step S303 or the authorization indication #2 in step S305, the API invoker may determine the response type, and send the authorization request message to the CCF.

Optionally, if the authorization indication includes the explicit indication (1), the API invoker may determine, based on a locally preconfigured response type, a response type corresponding to the service API ID, and request the CCF to obtain authorization of the user. For example, if the explicit indication is received, the API invoker sets the response type to code or token.

Optionally, the API invoker may determine the response type based on the authorization mode (3) in the authorization indication #1 or the authorization indication #2. The response type may be carried in the authorization request message. For example, if the authorization mode is the OAuth 2.0-based authorization code mode, the response type is code; or if the authorization mode is the OAuth 2.0-based implicit mode, the response type is token.

Optionally, the API invoker determines the authorization response type based on the cause value (4) in the authorization indication #1 or the authorization indication #2. For example, if the received cause value indicates that authorization of the target user is required for requesting to operate the data of the target user, the API invoker sets the response type to code or token.

S312: The CCF sends the authorization request message to the authorization function network element.

Correspondingly, the authorization function network element receives the authorization request message from the CCF.

The authorization request message includes an identifier of the API invoker, an identifier of the target API, and an identifier of the target user.

In an example, before the CCF sends the authorization request message to the authorization function network element, the CCF determines the address of the authorization function network element based on an address list, and sends the authorization request message to the authorization function network element based on the address of the authorization function network element.

For example, the address list indicates a mapping relationship between the identifier of the target API and the address of the authorization function network element.

Optionally, the address list may be locally configured by the CCF, may be preconfigured by the CCF, or may be configured by another network function network element for the CCF. This is not specifically limited herein.

S320: When the AuF determines that the target user consents to the API invoker operating the data of the target user, the authorization function network element generates a first token with integrity protection.

The first token indicates that the API invoker has permission to access the data of the target user, and the first token includes an identifier of the target user.

It should be noted that, for a specific implementation in which the AuF determines that the target user consents to the API invoker operating the data of the target user, refer to steps S233 to S235 in FIG. 2(c) or steps S243 to S245 in FIG. 2(d). For brevity, details are not described herein again.

Optionally, the first token further includes one or more of the following: expiration time, an identifier of the API invoker, an identifier of the target API, or a signer.

The signer indicates a signing entity, so that the AuF can select different certificates based on different signers to check the first token. For example, the signer may indicate an identifier of a network element that signs the first token, indicate an identifier of a network element that generates the first token, or indicate an identifier of the authorization function network element. This is not specifically limited in this application. For example, the signer may be an AuF ID or a CAPIF ID, or may be an AuF type or a CAPIF type, or may be any one of the following: authorization code grant, implicit grant, client credential grant, or user password credential grant, or may be user grant or network function grant.

Optionally, the first token further includes one or more of the following: generation time of the first token, validity time of the first token, expiration time of validity of the first token, or the like.

Optionally, the first token further includes another parameter, for example, an allowed resource and network slice information. This is not specifically limited in this application.

Optionally, the authorization function network element first generates a claim based on the foregoing parameters, then generates a signature based on the claim, and finally generates the first token with integrity protection based on the claim and the signature.

It should be noted that the first token is generated based on the identification information of the target user, so that authorization of a finer granularity can be implemented, that is, the API invoker can be authorized to have permission to access the target API to operate the personal data of the target user.

S330: The authorization function network element sends an authorization response message to the API invoker.

Correspondingly, the API invoker receives the authorization response message from the authorization function network element.

The authorization response message includes the first token with integrity protection. The first token indicates that the API invoker has permission to access the data of the target user, and the first token includes an identifier of the target user.

For example, if the user consent information indicates that the user consents to authorizing the API invoker to invoke the service API to operate the user data, the authorization response message includes the first token with integrity protection. On the contrary, if the user consent information indicates that the user refuses to authorize the API invoker to invoke the service API to operate the user data, the authorization response message includes failure indication information, where the failure indication information indicates that the user does not authorize the API invoker to invoke the service API to operate the user data.

For example, the authorization response message may be an OAuth2.0 authorization response message.

In a possible implementation, the API invoker receives the authorization response message from the authorization function network element, and may further forward the authorization response message by using the CCF as an intermediate node. This corresponds to steps S331 and S332.

S331: The authorization function network element sends the authorization response message to the CCF.

Correspondingly, the CCF receives the authorization response message from the authorization function network element.

S332: The CCF sends the authorization response message to the API invoker.

Correspondingly, the API invoker receives the authorization response message from the authorization function network element.

The authorization response message includes the first token with integrity protection. The first token indicates that the API invoker has permission to access the data of the target user, and the first token includes an identifier of the target user.

Then, the API invoker may send a first API invocation request message to the AEF based on the first token obtained in step S330 or S305, to request to invoke the target API to operate the personal data of the target user.

S340: The API invoker sends the first API invocation request message to the AEF.

Correspondingly, the AEF receives the first API invocation request message from the API invoker.

The first API invocation request message is used to request to invoke the target API to operate the data of the target user, and the first API invocation request message includes an identifier of the target user and the first token.

Optionally, the first API invocation request message further includes an identifier of the target API (Service API ID) and/or an identifier of the API invoker (API Invoker ID).

Optionally, the first API invocation request message may carry information about the target API.

For example, the first API invocation request message may be a service API invocation request message.

In an example, the first API invocation request message further includes a second token, the second token indicates that the API invoker has permission to invoke the target API, and the second token includes an identifier of the API invoker and an identifier of the target API.

Optionally, before the API invoker sends the first API invocation request message to the AEF, the API invoker may request the CCF to obtain the second token, that is, the method further includes steps S306 and S307.

S306: The API invoker sends a first request message to the CCF.

Correspondingly, the CCF receives the first request message from the API invoker.

The first request message is used to request to obtain permission for invoking the target API, and the first request message includes an identifier of the API invoker and an identifier of the target API.

For example, the first request message may be a registration API invoker request message or a discovery service request message. For example, the first request message may be an onboard API invoker request message or a discovery service request message.

S307: The CCF sends the second token to the API invoker.

Correspondingly, the API invoker receives the second token from the CCF.

The second token includes an identifier of the target API.

Optionally, the second token further includes at least one of the following: an identifier of the API invoker, expiration time, or a signature.

Optionally, the second token further includes one or more of the following: generation time of the second token, validity time of the second token, expiration time of validity of the second token, or the like.

Based on the received second token, the AEF may determine that the API invoker has permission to invoke the target API, that is, the method further includes step S308:
S308: Optionally, the AEF determines, based on the second token, that the API invoker has permission to invoke the target API.

Optionally, the AEF may separately check the signature of the second token, the identifier of the API invoker, the identifier of the target API, the expiration time, or the like.

For example, the AEF may check the signature of the second token based on a preconfigured credential (such as, a certificate) of the CCF.

Further, when the check on the signature succeeds, the AEF continues to check the information in the second token.

For example, the AEF determines, by determining that the identifier of the target API carried in the second token is consistent with the identifier of the target API carried in the first API invocation request message, that the API invoker has permission to invoke the target API.

Optionally, the AEF determines whether the API invoker ID carried in the second token is consistent with the API invoker ID in the API invocation request message.

Optionally, the AEF determines, based on the expiration time carried in the second token, whether the current token expires.

Optionally, if the validity time of the second token is 5h, the generation time of the second token is 2:30, and the time at which the AEF receives the API invocation request message is 10:30, the AEF determines that the second token has expired, and then rejects the request of the API invoker for accessing the target API.

Optionally, the AEF may accept the invocation request of the API invoker for the target API when the expiration time of validity of the second token is 12:30, the time at which the AEF receives the API invocation request message is 12:00, and the signature and the specific information content that are carried in the second token are checked.

Optionally, after determining whether the API invoker has permission to invoke the target API, the AEF may further determine whether the API invoker has permission to operate the data of the target user. In other words, an execution sequence of step S308 and step S350 is not limited in this application.

S350: The AEF determines, based on the first token, whether the API invoker has permission to operate the data of the target user.

It should be understood that the first token includes the claim and the signature. Therefore, the AEF needs to determine, based on the claim and the signature, whether the API invoker has permission to operate the data of the target user. A specific implementation includes the following two steps.

Step 1: The AEF checks the signature of the first token.

In an example, the AEF checks the integrity protection of the first token based on a credential of the authorization function network element, where the authorization function network element is a network element that generates the first token.

Optionally, the credential of the authorization function network element may be preconfigured by the AEF.

Optionally, before the AEF performs integrity check on the first token based on the credential of the authorization function network element, the AEF may obtain the credential of the authorization function network element based on the signer.

Optionally, the first token further includes the signer. For example, the AEF may obtain the credential of the authorization function network element based on the signer.

For example, if the signer is an AuF ID or a CAPIF ID, the AEF may preconfigure a credential corresponding to the signer, that is, the AEF may obtain the credential corresponding to the AuF ID or the CAPIF ID, to check the signature of the first token. For another example, if the signer is an AuF or a CAPIF, the AEF may preconfigure credentials corresponding to different types of the signer, that is, the AEF may obtain the credential corresponding to the AuF or the CAPIF, to check the signature of the first token. If the signer is any one of an authorization code credential, an implicit credential, a client credential, or a user password credential, the AEF may preconfigure credentials corresponding to different types of the signer, that is, the authorization code credential, the implicit credential, or the user password credential may use the credential of the AuF, and the client credential may use the credential of the CAPIF. If the signer is user authorization or network function authorization, the AEF preconfigures credentials corresponding to different types of the signer, that is, the user authorization may use the credential of the AuF, and the network function authorization may use the credential of the CAPIF.

Based on this, when the AEF successfully checks the signature of the first token by using the preconfigured credential, it indicates that the first token is not tampered with. Otherwise, the check fails, and the AEF may reject the request of the API invoker for invoking the target API.

It should be understood that, after the check on the signature of the first token succeeds, the AEF continues to perform check on the claim in step 2, that is, checks the content information of the first token.

Step 2: The AEF checks information content in the claim of the first token.

The claim includes an identifier of the target user.

In an example, the AEF determines whether the identifier of the target user carried in the first token is consistent with the identifier of the target user carried in the first API invocation request message.

Optionally, the claim further includes at least one of the following: expiration time, an identifier of the API invoker, an identifier of the target API, or the like.

Optionally, the AEF determines whether the identifier of the API invoker carried in the first token is consistent with the identifier of the API invoker carried in the first API invocation request message.

Optionally, the AEF determines whether the identifier of the target API carried in the first token is consistent with the identifier of the target API carried in the first API invocation request message.

Optionally, the claim may further include one or more of the following: generation time of the first token, validity time of the first token, expiration time of validity of the first token, or the like.

For example, if the validity time of the first token is 12h, the generation time of the first token is 2:30, and time at which the AEF receives an API invocation request message #B is 12:30, the AEF may accept the API invocation request of the API invoker when the signature and specific information content of the first token are checked. For another example, if the expiration time of the validity of the first token is 12:30, and time at which the AEF receives an API invocation request message #B is 12:00, the AEF may accept the API invocation request of the API invoker when the signature and specific information content of the first token are checked.

It should be noted that, only after the check in the foregoing two steps succeeds, the AEF may determine that the API invoker has permission to operate the data of the target user. Otherwise, the AEF may determine that the API invoker does not have permission to operate the data of the target user.

S360: The AEF determines, based on a determining result, whether to provide the API invoker with permission to access the data of the target user.

It should be noted that, based on a check result of the first token (for example, when the first token is successfully checked), whether to provide the API invoker with permission to access the data of the target user may be further determined by using two methods. For example, the second token is checked, to determine whether the API invoker has permission to access the target API; or the AEF checks an access control list from the CCF, to request to obtain an access policy for the API invoker to invoke the target API.

Optionally, when the API invoker has permission to operate the data of the target user, and the access policy indicates that the API invoker is allowed to invoke the target API, the AEF provides the API invoker with permission to access the data of the target user.

Optionally, the access policy indicating that the API invoker is allowed to invoke the target API may be obtained from the AEF.

For example, the AEF sends a third request message to the CCF, and receives the access policy from the CCF.

The third request message is used to request to obtain the access policy for the API invoker to invoke the target API, the third request message includes an identifier of the API invoker and an identifier of the target API, and the access policy indicates whether the API invoker is allowed to invoke the target API.

Based on the determining in step S360, the AEF may provide the API invoker with permission to access the data of the target user. That is, the method further includes step S309.

S309: The AEF sends a first API invocation response message to the API invoker.

Correspondingly, the API invoker receives the first API invocation response message from the AEF.

The first API invocation response message is used to return a result of invoking the target API for operating the user data to the API invoker ID. For example, the API invoker ID is authorized to have permission to invoke the target API to operate the user data.

For example, if a server invokes, from the AEF by using the API invocation request message #B, an API for requesting a UE identifier, for example, Nnef_UEIdentifier_Get, input user information of the API is set to an IP address or a domain name of a UE, and an AF ID is set to an ID of the discussed server, the AEF return an API invocation response message #B, where the message includes an external identifier of the UE, for example, a GPSI.

Optionally, when the API invoker has permission to operate the data of the target user, the AEF may send a subscription information update message to the UDM, to update the user consent information of the target user, and the user consent information indicates that the target user consents to operate the data of the target user.

The subscription information update request message is used to update user consent information of the UE. The subscription information update message may include one or more of the following: a user identifier, a data processing purpose, an API invoker ID, expiration time, or a user consent result.

It should be understood that the data processing purpose is obtained through conversion based on the server API ID, and the user consent result may be obtained based on user consent information #A in step S420.

In this implementation, the AEF updates subscription information of the UE on the UDM, so that a quantity of times that the AuF requests RO authorization can be reduced.

According to the solution provided in this application, the API invoker obtains, from the authorization function network element, the first token of a finer granularity authorized by the user, and accesses the AEF by using the first token, so that the AEF can authorize the API invoker to access an API and process data of a user. According to the method, whether the user performs authorization is considered when the data of the user is processed, to avoid exposure of user privacy information, and reduce a potential security risk faced by a network function in a mobile communication network.

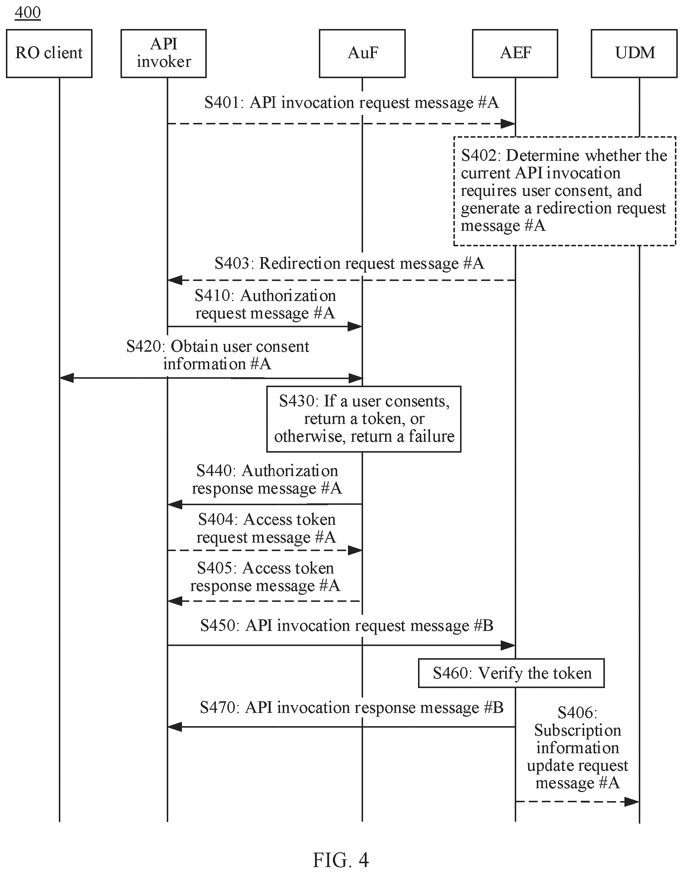

Considering that the current technical solution is limited to authorization only between NFs, a granularity is only that an NF 1 authorizes an NF 2 to access an API. In this implementation, the AuF and the token of a finer granularity are introduced, so that a user is involved in an authorization process. A granularity may be that the NF 1 authorizes the NF 2 to access an API and invoke data of a user. The following describes in detail a method for obtaining user authorization with reference to FIG. 4.

FIG. 4 is a schematic flowchart of a communication method 400 according to an embodiment of this application. As shown in FIG. 4, the method includes the following multiple steps.

S401: Optionally, an API invoker (API Invoker) sends an API invocation request message #A (that is, an example of a second API invocation request message) to an AEF.

Correspondingly, the AEF receives the API invocation request message #A from the API invoker.

For example, the API invocation request message #A is used to request to invoke a service API (that is, an example of a target API) to operate personal data of a user, and the API invocation request message #A includes an identifier of the API invoker (API Invoker ID).

The API invoker ID identifies the API invoker. The service API ID indicates an identifier of an API that the API invoker expects to invoke, and the API indicates a specific operation manner for the personal data of the user, for example, collection, reading, analysis, and sharing.

It should be noted that the user herein may be understood as a resource owner (resource owner), and names of the user and the resource owner may be used alternatively. This is not specifically limited in this application.

For example, the API invoker may be UE, or may be an AF. In a 3GPP network, the AEF may be an NEF, and the AEF is a provider of the service API, and is also a service communication entrance of the API invoker. This is not limited in this application.

Optionally, the API invocation request message #A further includes a user identifier 1 (that is, an example of an identifier of a target user) and/or an identifier of a target API (Service API ID).

The user identifier 1 may include but is not limited to an SUPI, an SUCI, a GPSI, a PEI, or an MSISDN.

Optionally, the API invocation request message #A carries a service API ID. For example, the API invocation request message #A may include but is not limited to: a location message Nnef_Location, a get message Nnef_UEIdentifier_Get, an analytics subscription message Nnwdaf_AnalyticsSubscription_Subscribe, and the like.

It should be understood that a specific form of the user identifier 1 is not limited in this application, provided that the user identifier 1 can identify the user. A name of the API invocation request message (or information) is not limited in this application, provided that a corresponding function can be implemented.

S402: Optionally, the AEF determines whether the current API invocation requires user consent, and generates a redirection request message #A (that is, an example of a redirection request message).

The redirection request message #A indicates the API invoker to request an AuF to obtain authorization of the user.

For example, the AEF may determine, based on local configuration information, whether the current API requires user consent. For example, the local configuration information may be an API list, and all APIs in the API list are APIs that require user consent.

Optionally, the API list may further correspond to an AuF address, that is, each API corresponds to one AuF address. In this case, the AEF may determine, based on the API list, an AuF address corresponding to the service API.

In an example, when it is determined that user consent is required for the API invoker to invoke the current service API, and the AEF does not have a UE context corresponding to the user identifier 1, or the UE context corresponding to the user identifier 1 does not store user consent information of the UE, the AEF may generate the redirection request message #A.

In another example, when it is determined that user consent is required for the API invoker to invoke the current service API, and the AEF fails to obtain user consent information of the UE from a UDM, the AEF may generate the redirection request message #A. For example, the AEF sends a subscription information obtaining request message to the UDM, to request to obtain subscription information of the UE. The subscription information obtaining request message includes a user identifier 2. Correspondingly, a subscription information obtaining response message sent by the UDM to the AEF does not include the user consent information of the UE.

Optionally, the subscription information obtaining request message may be a Nudm_SDM_Get request message, and the subscription information obtaining response message may be a Nudm_SDM_Get response message.

Therefore, the AEF needs to notify the API invoker to find the AuF for user authorization.

Optionally, if the AEF has the user consent information of the UE, and the user consent information indicates that the UE consents to the API invoker invoking the service API to operate the personal data of the user, the AEF may directly perform step S470.

S403: Optionally, the AEF sends the redirection request message #A to the API invoker.

Correspondingly, the API invoker receives the redirection request message #A from the AEF.

The redirection message #A includes an authorization indication.

For example, the authorization indication may include one or more of the following:
(1) Explicit indication, that is, the authorization indication indicates the API invoker to determine an AuF address and request the AuF to obtain authorization of the user. For example, a bit" 1 " is carried in the authorization indication to indicate that authorization of the user is required by the API invoker for operating the personal data of the user.
(2) AuF address (for example, IP address or domain name). The AuF address may be preconfigured on the AEF. For example, each API in an API list locally preconfigured by the AEF corresponds to one AuF address, and the AEF may determine, based on the service API ID, an AuF address that the API invoker needs to search for.
(3) Authorization mode: indicates a specific authorization method, for example, an OAuth 2.0-based authorization code mode or implicit mode.
(4) Cause value: indicates that authorization of the target user is required for requesting to operate the data of the target user.

Optionally, the redirection message #A further includes a service API ID and/or a user identifier 1. The service API ID indicates an API that needs to be authorized.

For example, the redirection request message #A may be an HTTP message whose status code is 302.

Optionally, step S403 may be replaced with: The AEF sends an authorization indication to the API invoker, where the authorization indication includes a cause value, and the cause value indicates that authorization of the target user is required for requesting to operate the data of the target user.

Optionally, the API invoker determines the address of the authorization function network element based on the cause value. The API invoker sends an authorization request message to the authorization function network element based on the address of the authorization function network element.

Optionally, the API invoker obtains the address of the authorization function network element from the configured address list based on the cause value.

S410: The API invoker sends an authorization request message #A (that is, an example of the authorization request message) to the AuF.

Correspondingly, the AuF receives the authorization request message #A from the API invoker.

The authorization request message #A is used to request to obtain authorization of the user, and the authorization request message #A includes a user identifier 1 (that is, an example of an identifier of the target user).

Optionally, the authorization request message #A further includes a service API ID and/or an API invoker ID.

Optionally, the service API ID and/or the user identifier 1 are/is obtained from the redirection message #A.

Optionally, the authorization request message #A further includes a response type and/or scope indication information. The response type indicates a current authorization mode. For example, code indicates an authorization code mode, and token indicates an implicit mode. The scope indication information indicates an authorization scope, for example, may include a service API ID and a user identifier 1.

In a possible implementation, the API invoker sends the authorization request message #A to the AuF based on the redirection request message #A in step S403.

For example, the API invoker determines the address of the AuF based on the authorization indication to perform authorization. For example, if the authorization indication includes the explicit indication (1), the API invoker may determine, based on a locally preconfigured AuF address list, the AuF address corresponding to the service API ID, and request to obtain authorization of the user from the AuF. For another example, if the authorization indication includes the AuF address (2), the API invoker may directly send the authorization request message #A to the AuF based on the AuF address.

Optionally, the API invoker may determine the response type based on the authorization mode (3) in the authorization indication. The response type may be carried in the authorization request message #A. For example, if the authorization mode is the OAuth 2.0-based authorization code mode, the response type is code; or if the authorization mode is the OAuth 2.0-based implicit mode, the response type is token.

For example, the authorization request message #A may be an OAuth2.0 authorization request message.

S420: The AuF interacts with an RO client to obtain user consent information #A.

If the current authorization mode is the OAuth2.0 authorization code mode, for a specific implementation of this step, refer to steps S233 to S235 in FIG. 2(c); or if the current authorization mode is the OAuth2.0 implicit mode, refer to steps S243 to S245 in FIG. 2(d). For brevity, details are not described herein again.

S430: The AuF determines an authorization response message #A (that is, an example of an authorization response message).

For example, based on step S420, if the user consent information #A indicates that the user consents to authorizing the API invoker to invoke the service API to operate the user data, the authorization response message #A includes a token with integrity protection, where the token includes a user identifier 1. On the contrary, if the user consent information #A indicates that the user refuses to authorize the API invoker to invoke the service API to operate the user data, the authorization response message #A includes failure indication information, where the failure indication information indicates that the user does not authorize the API invoker to invoke the service API to operate the user data.

S440: The AuF sends the authorization response message #A to the API invoker.

Correspondingly, the API invoker receives the authorization response message #A from the AuF.

S404: Optionally, the API invoker sends an access token request message #A to the AuF.

Correspondingly, the AuF receives the access token request message #A from the API invoker.

S405: Optionally, the AuF sends an access token response message #A to the API invoker.

Correspondingly, the API invoker receives the access token response message #A from the AuF.

The access token response message #A includes a token with integrity protection, and the token includes a user identifier 1.

It should be noted that, for specific implementations of steps S404 and S405, refer to steps S237 and S238 in FIG. 2(c). For brevity, details are not described herein again.

It should be understood that, for steps S430 and S405, a signature of the token with integrity protection may be a digital signature of the AuF on the token. For example, the token may further include a claim (claims), and the claim includes one or more of the following: expiration time, an API invoker ID, a service API ID, or a signer. The signer indicates a signing entity, so that the AuF can select different certificates based on different signers to check the token. For example, the signer may be an AuF ID or a CAPIF ID, or may be an AuF type or a CAPIF type, or may be any one of the following: authorization code grant, implicit grant, client credential grant, or user password credential grant, or may be user grant or network function grant.

Optionally, the claim may further include one or more of the following: generation time of the token, validity time of the token, expiration time of validity of the token, or the like.

Optionally, the claim may further include another parameter, for example, an allowed resource and network slice information. This is not specifically limited in this application.

Optionally, for specific implementations of steps S420 to S405, refer to the authorization mode in the OAuth 2.0-based authorization code (authorization code grant) mode shown in FIG. 2(c) for authorization. For specific implementations of steps S420 to S440, refer to the authorization mode in the OAuth 2.0-based implicit code (implicit grant) mode shown in FIG. 2(d) for authorization. For brevity, details are not described herein again.

S450: The API invoker sends an API invocation request message #B (that is, an example of a first API invocation request message) to the AEF.

Correspondingly, the AEF receives the API invocation request message #B from the API invoker.

The API invocation request message #B includes a user identifier 1 (that is, an example of an identifier of the target user) and a token with integrity protection (that is, an example of a first token). The token includes a user identifier 1.

Optionally, the API invocation request message #B includes an API invoker ID and/or a service API ID.

Optionally, the token includes one or more of the following: expiration time, an API invoker ID, a service API ID, or a signer.

Optionally, the signer may not be placed in a claim of the token, but is carried in the API invocation request message #B.

S460: The AEF checks the token.

A specific implementation of checking the token by the AEF includes the following two steps:
Step 1: The AEF checks the signature of the token, that is, checks integrity protection of the token.

In a possible implementation, the AEF checks the signature of the token based on a preconfigured AuF credential (for example, a certificate).

For example, the AEF determines, based on the signer (which may be carried in the claim of the token, or may be carried in the API invocation request message #B), a credential to be used to check the signature of the token. For example, if the signer is an AuF ID or a CAPIF ID, the AEF may preconfigure a credential corresponding to the signer, that is, the AEF may obtain the credential corresponding to the AuF ID or the CAPIF ID, to check the signature of the token. For another example, if the signer is an AuF or a CAPIF, the AEF may preconfigure credentials corresponding to different types of the signer, that is, the AEF may obtain the credential corresponding to the AuF or the CAPIF, to check the signature of the token. If the signer is any one of an authorization code credential, an implicit credential, a client credential, or a user password credential, the AEF may preconfigure credentials corresponding to different types of the signer, that is, the authorization code credential, the implicit credential, or the user password credential may use the credential of the AuF, and the client credential may use the credential of the CAPIF. If the signer is user authorization or network function authorization, the AEF preconfigures credentials corresponding to different types of the signer, that is, the user authorization may use the credential of the AuF, and the network function authorization may use the credential of the CAPIF.

Based on this, when the AEF successfully checks the signature of the token by using the preconfigured credential, it indicates that the token is not tampered with. Otherwise, the check fails, and the AEF may reject the request of the API invoker for invoking the target API.

It should be understood that, after the check on the signature of the token succeeds, the AEF continues to perform check on the claim in step 2, that is, checks the content information of the first token.

Step 2: The AEF checks the claim of the token.

For example, the AEF may determine whether the user identifier 1 in the API invocation request message #B is consistent with the user identifier 1 in the token.

Optionally, the AEF determines whether the API invoker ID in the API invocation request message #B is consistent with the API invoker ID in the token; or the AEF determines whether the service API ID in the API invocation request message #B is consistent with the service API ID in the token; or the AEF determines, based on a comparison between the expiration time in the token and current time, whether the token is still valid.

Optionally, the token may be generally reused by the API invoker within a validity period.

Optionally, the claim may further include one or more of the following: generation time of the token, validity time of the token, expiration time of validity of the token, or the like. For example, if the validity time of the token is 12h, the generation time of the token is 2:30, and time at which the AEF receives the API invocation request message #B is 12:30, the AEF may accept the API invocation request of the API invoker when the signature and specific information content of the token are checked. For another example, if the expiration time of validity of the token is 12:30, and time at which the AEF receives the API invocation request message #B is 12:00, the AEF may accept the API invocation request of the API invoker and the like when the signature and specific information content of the token are checked.

Further, after the check in step 1 and step 2 succeeds, the AEF may accept the API invocation request of the API invoker, that is, the AEF performs steps S470 and S406. If the foregoing determining fails, the AEF may reject the API invocation request of the API invoker.

S470: The AEF sends an API invocation response message #B to the API invoker.

Correspondingly, the API invoker receives the API invocation response message #B from the AEF.

The API invocation response message #B is used to return a result of invoking the target API by the API invoker ID to operate the user data. For example, the API invoker ID is authorized to have permission to invoke the target API to operate the user data.

For example, if a server invokes, from the AEF by using the API invocation request message #B, an API for requesting a UE identifier, for example, Nnef_UEIdentifier_Get, input user information of the API is set to an IP address or a domain name of a UE, and an AF ID is set to an ID of the discussed server, the AEF return the API invocation response message #B, where the message includes an external identifier of the UE, for example, a GPSI.

S406: Optionally, the AEF sends a subscription information update request message #A to the UDM.

Correspondingly, the UDM receives the subscription information update request message #A from the AEF.

The subscription information update request message #A is used to update user consent information of the UE. The subscription information update message #A may include one or more of the following: a user identifier 2, a data processing purpose, an API invoker ID, expiration time, or a user consent result.

It should be understood that the user identifier 2 is converted from the user identifier 1, and may be an SUPI, the data processing purpose is obtained through conversion based on the server API ID, and the user consent result may be obtained based on the user consent information #A in step S420.

In this implementation, the AEF updates subscription information of the UE on the UDM, so that a quantity of times that the AuF requests RO authorization can be reduced.

According to the method disclosed in this application, the AuF is introduced to generate a token of a finer granularity (including a user identifier 1), so that user consent information is considered in an authorization process, and a granularity can be that an NF 1 authorizes an NF 2 to access an API and invoke data of a user. Compared with the conventional technology in which authorization is performed only between NFs, and a granularity is that the NF 1 authorizes the NF 2 to access an API, this implementation in which user authorization is required when user data is processed, and user privacy information is protected can avoid user privacy exposure, and reduce a potential security risk faced by a network function in a mobile communication network.

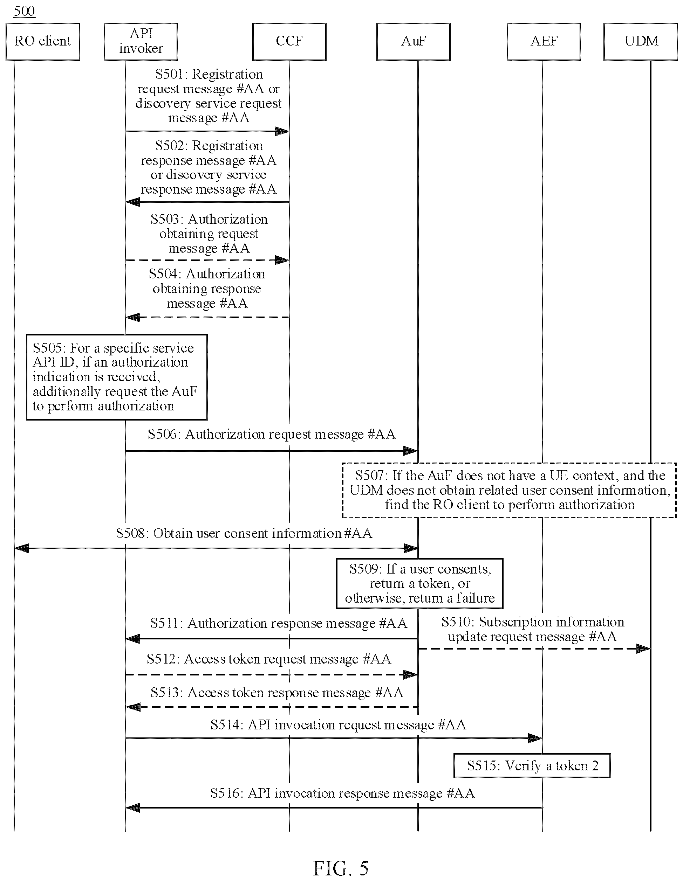

FIG. 5 is a schematic flowchart of a communication method 500 according to an embodiment of this application. Different from the method 400, in this implementation, a CCF provides an API invoker with information about user authorization that is required, and decouples a token for invoking an API from a token for operating personal data of a user. As shown in FIG. 5, the method includes the following multiple steps.

S501: The API invoker sends a registration request message #AA or a discovery request message #AA (that is, an example of a second request message) to the CCF.

Correspondingly, the CCF receives the registration request message #AA or the discovery request message #AA from the API invoker.

The registration request message #AA or the discovery request message #AA includes a user identifier 1 (that is, an example of a target user) and a server API ID (that is, an example of an identifier of a target API). For a specific meaning of the registration request message #AA or the discovery request message #AA, refer to the specific meaning of the message in step S211 or S213. The registration request message #AA is used to register the API invoker with the CCF, and the discovery request message #AA is used by the API invoker to discover the target API.

S502: The CCF sends a registration response message #AA or a discovery response message #AA (that is, an example of a second API invocation response message) to the API invoker.

Correspondingly, the API invoker receives the registration response message #AA or the discovery response message #AA from the CCF.

The registration response message #AA or the discovery response message #AA includes an authorization indication. For a specific meaning of the registration response message #AA or the discovery response message #AA, refer to the specific meaning of the message in step S212 or S214.

For example, the authorization indication may include one or more of the following:
(1) Explicit indication, that is, the authorization indication indicates the API invoker to determine an AuF address and request the AuF to obtain authorization of the user. For example, a bit" 1 " is carried in the authorization indication to indicate that authorization of the user is required by the API invoker for operating the personal data of the user.
(2) AuF address (for example, IP address or domain name). The AuF address may be preconfigured on the AEF. For example, each API in an API list locally preconfigured by the AEF corresponds to one AuF address, and the AEF may determine, based on the service API ID, an AuF address that the API invoker needs to search for.
(3) Authorization mode: indicates a specific authorization method, for example, an OAuth 2.0-based authorization code mode or implicit mode.
(4) Cause value: indicates that authorization of the target user is required for requesting to operate the data of the target user.

Optionally, the registration response message #AA or the discovery response message #AA further includes a service API ID and/or a user identifier 1. The service API ID indicates an API that needs to be authorized.

S503: Optionally, the API invoker sends an authorization obtaining request message #AA (that is, an example of a first request message) to the CCF based on the authorization indication.

Correspondingly, the CCF receives the authorization obtaining request message #AA from the API invoker.

The authorization obtaining request message #AA is used to request to obtain permission for invoking a service API, and the authorization obtaining request message #AA includes an API invoker ID and a service API ID.

S504: Optionally, the CCF sends an authorization obtaining response message #AA to the API invoker.

Correspondingly, the API invoker receives the authorization obtaining response message #AA from the CCF.

The authorization obtaining response message #AA includes a token 1 (that is, an example of a second token), and the token 1 indicates that the API invoker has permission to access the service API.

S505: The API invoker determines, based on the authorization indication, to request the AuF to perform authorization.

It should be understood that, based on the authorization indication in step S502, for a specific service API ID, the API invoker needs to additionally request the AuF to perform user authorization. Therefore, when the API invoker prepares for invoking a specific service API ID, and the service API ID has a corresponding authorization indication, the API invoker needs to determine an address of the AuF based on the authorization indication to perform authorization.

For example, the API invoker determines the address of the AuF based on the authorization indication to perform authorization. For example, if the authorization indication includes the implicit indication (1), the API invoker may request, based on a preconfigured AuF address, the AuF to obtain authorization of the user. For another example, if the authorization indication includes the AuF address (2), the API invoker requests, based on the AuF address, the AuF to obtain authorization of the user.

Optionally, the API invoker may determine a to-be-used response type based on the authorization mode (3) in the authorization indication. For example, if the authorization mode is the OAuth 2.0-based authorization code mode, the response type is code; or if the authorization mode is the OAuth 2.0-based implicit mode, the response type is token.

S506: The API invoker sends an authorization request message #AA (that is, an example of an authorization request message) to the AuF.

Correspondingly, the AuF receives the authorization request message #AA from the API invoker.

The authorization request message #AA is used to request to obtain authorization of the user, and the authorization request message #AA includes a user identifier 1 (that is, an example of an identifier of the target user).

Optionally, the authorization request message #AA further includes a service API ID and/or an API invoker ID.

Optionally, the authorization request message #AA further includes a response type and/or scope indication information. The response type indicates a current authorization mode. For example, code indicates an authorization code mode, and token indicates an implicit mode. The scope indication information indicates an authorization scope, for example, may include a service API ID and a user identifier 1.

For example, the authorization request message #AA may be an OAuth2.0 authorization request message.

S507: Optionally, the AuF determines whether the current API invocation requires user consent.

For example, the AuF may determine, based on local configuration information, whether the current API requires user consent. For example, the local configuration information may be an API list, and all APIs in the API list are APIs that require user consent.

In an example, when it is determined that user consent is required for the API invoker to invoke the current service API, and the AuF does not have a UE context corresponding to the user identifier 1, or the UE context corresponding to the user identifier 1 does not store user consent information of the UE, the AuF determines that an RO client needs to be authorized.

In another example, when it is determined that user consent is required for the API invoker to invoke the current service API, and the AuF fails to obtain the user consent information of the UE from a UDM, the AuF determines that an RO client needs to be authorized.

S508: The AuF interacts with the RO client to obtain user consent information #AA.

If the current authorization mode is the OAuth2.0 authorization code mode, for a specific implementation of this step, refer to steps S233 to S235 in FIG. 2(c); or if the current authorization mode is the OAuth2.0 implicit mode, refer to steps S243 to S245 in FIG. 2(d). For brevity, details are not described herein again.

S509: The AuF determines an authorization response message #AA.

For example, based on step S508, if the user consent information #AA indicates that the user consents to authorizing the API invoker to invoke the service API to operate the user data, the authorization response message #AA includes a token 2 with integrity protection (that is, an example of a first token), where the token 2 includes a user identifier 1. On the contrary, if the user consent information #AA indicates that the user refuses to authorize the API invoker to invoke the service API to operate the user data, the authorization response message #AA includes failure indication information, where the failure indication information indicates that the user does not authorize the API invoker to invoke the service API to operate the user data.

S510: Optionally, the AEF sends a subscription information update request message #AA to the UDM.

Correspondingly, the UDM receives the subscription information update request message #AA from the AEF.

The subscription information update request message #AA is used to update user consent information of the UE. The subscription information update message #AA may include one or more of the following: a user identifier 2, a data processing purpose, an API invoker ID, expiration time, or a user consent result.

It should be understood that the user identifier 2 is converted from the user identifier 1, and may be an SUPI, the data processing purpose is obtained through conversion based on the server API ID, and the user consent result may be obtained based on the user consent information #AA in step S508.

In this implementation, the AuF updates subscription information of the UE on the UDM, so that a quantity of times that the AuF requests RO authorization can be reduced.

S511: The AuF sends an authorization response message #AA (that is, an example of an authorization response message) to the API invoker.

Correspondingly, the API invoker receives the authorization response message #AA from the AuF.

The authorization response message #AA includes a token 2 with integrity protection, and the token 2 includes a user identifier 1.

S512: Optionally, the API invoker sends an access token request message #AA to the AuF.

Correspondingly, the AuF receives the access token request message #AA from the API invoker.

S513: Optionally, the AuF sends an access token response message #AA to the API invoker.

Correspondingly, the API invoker receives the access token response message #AA from the AuF.

The access token response message #AA includes a token 2 with integrity protection, and the token 2 includes a user identifier 1.

It should be noted that, for specific implementations of steps S512 and S513, refer to steps S237 and S238 in FIG. 2(c). For brevity, details are not described herein again.

S514: The API invoker sends an API invocation request message #AA (that is, an example of a first API invocation request message) to the AEF.

Correspondingly, the AEF receives the API invocation request message #AA from the API invoker.

The API invocation request message #AA includes a user identifier 1 (that is, an example of the target user) and a token 2 with integrity protection. The token 2 includes a user identifier 1.

Optionally, the API invocation request message #AA includes one or more of the following: an API invoker ID, a service API ID, or a token 1.

Optionally, the token 2 includes one or more of the following: expiration time, an API invoker ID, a service API ID, or a signer. The signer may not be placed in a claim of the token 2, but is placed in the API invocation request message #AA.

S515: The AEF checks the token 2.

For a specific implementation of checking the token 2 by the AEF, refer to step S460 in the method 400. For brevity, details are not described herein again.

Optionally, the AEF further checks the token 1 based on the API invocation request message #AA, to determine that the CCF authorizes the API invoker to access the service API (that is, the target API). For a specific implementation of checking the token 1, refer to step S218 in step FIG. 2(a). For brevity, details are not described herein again.

It should be noted that, after the two tokens (including the token 1 and the token 2) are successfully checked, the AEF authorizes the API invoker to invoke the service API to operate the personal data of the user, that is, performs step S516. Otherwise, the AEF rejects the invocation request of the API invoker.

S516: The AEF sends an API invocation response message #AA to the API invoker.

Correspondingly, the API invoker receives the API invocation response message #AA from the AEF.

The API invocation response message #AA is used to return a result of invoking the target API by the API invoker ID to operate the user data. For example, the API invoker ID is authorized to have permission to invoke the target API to operate the user data.

For example, if a server invokes, from the AEF by using the API invocation request message #B, an API for requesting a UE identifier, for example, Nnef_UEIdentifier_Get, input user information of the API is set to an IP address or a domain name of a UE, and an AF ID is set to an ID of the discussed server, the AEF return the API invocation response message #B, where the message includes an external identifier of the UE, for example, a GPSI.

According to the method disclosed in this application, the CCF provides the API invoker with the token 1 indicating that the target API is authorized, and the AuF generates the token 2 of a finer granularity, so that user consent information is considered in an authorization process, and the AEF authorizes the API invoker to access an API and invoke data of a user. This implementation in which user authorization is required when user data is processed, and user privacy information is protected can avoid user privacy exposure, and reduce a potential security risk faced by a network function in a mobile communication network.

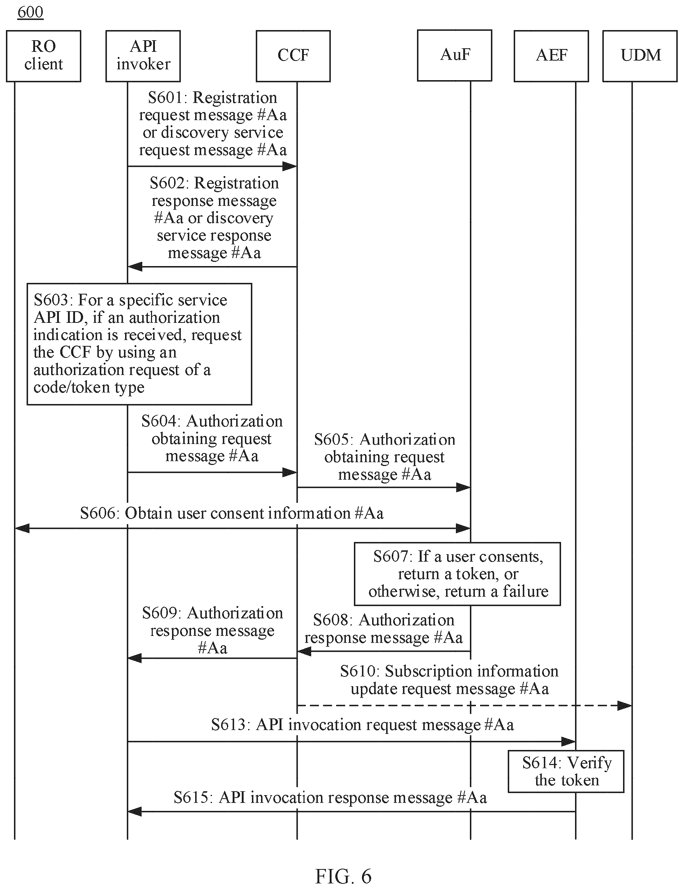

FIG. 6 is a schematic flowchart of a communication method 600 according to an embodiment of this application. A difference from the method 500 lies in that, in this implementation, a CCF, as an intermediate node, forwards a message between an AuF and an API invoker, to implement authorization of a finer granularity while reducing interaction signaling between the API invoker and the AuF, that is, authorize the API invoker to access an API and process data of a user. As shown in FIG. 6, the method includes the following multiple steps.

S601: The API invoker sends a registration request message #Aa or a discovery request message #Aa (that is, an example of a second request message) to the CCF.

Correspondingly, the CCF receives the registration request message #Aa or the discovery request message #Aa from the API invoker.

S602: The CCF sends a registration response message #Aa or a discovery response message #Aa (that is, an example of a second API invocation response message) to the API invoker.

Correspondingly, the API invoker receives the registration response message #Aa or the discovery response message #Aa from the CCF.

The registration response message #Aa or the discovery response message #Aa includes an authorization indication.

S603: The API invoker determines, based on the authorization indication, to request the AuF to perform authorization.

It should be understood that, based on the authorization indication in step S502, for a specific service API ID, the API invoker needs to additionally request the AuF to perform user authorization. Therefore, when the API invoker prepares for invoking a specific service API ID, and the service API ID has a corresponding authorization indication, the API invoker needs to determine an address of the AuF based on the authorization indication to perform authorization.

For specific implementations of steps S601 to S603, refer to steps S501 and S502 and step S505 in the method 500. For brevity, details are not described herein again.

S604: The API invoker sends an authorization request message #Aa (that is, an example of a second request message) to the CCF.

Correspondingly, the CCF receives the authorization request message #Aa from the API invoker.

The authorization request message #Aa is used to request to obtain user authorization, and the authorization request message #Aa includes a service API ID and a user identifier 1.

Optionally, the authorization request message #Aa further includes an API invoker ID.

Optionally, the authorization request message #Aa further includes a response type and/or scope indication information. The response type indicates a current authorization mode. For example, code indicates an authorization code mode, and token indicates an implicit mode. The scope indication information indicates an authorization scope, for example, may include a service API ID and a user identifier 1.

For example, the authorization request message #Aa may be an OAuth2.0 authorization request message.

S605: The CCF sends an authorization request message #Aa to the AuF.

Correspondingly, the AuF receives the authorization request message #Aa from the CCF.

Optionally, the CCF may preconfigure an address of the AuF, for example, a mapping relationship between an API service ID and an AuF. The CCF may obtain the address of the AuF based on the service API ID, and then send the authorization request message #Aa to the AuF based on the address of the AuF.

S606: The AuF interacts with an RO client to obtain user consent information #Aa.

If the current authorization mode is the OAuth2.0 authorization code mode, for a specific implementation of this step, refer to steps S233 to S235 in FIG. 2(c); or if the current authorization mode is the OAuth2.0 implicit mode, refer to steps S243 to S245 in FIG. 2(d). For brevity, details are not described herein again.

S607: The AuF determines an authorization response message #Aa.

For example, based on step S606, if the user consent information #Aa indicates that the user consents to authorizing the API invoker to invoke the service API to operate user data, the authorization response message #Aa includes a token with integrity protection (that is, an example of a first token), where the token includes a user identifier 1. On the contrary, if the user consent information #Aa indicates that the user refuses to authorize the API invoker to invoke the service API to operate the user data, the authorization response message #Aa includes failure indication information, where the failure indication information indicates that the user does not authorize the API invoker to invoke the service API to operate the user data.

S608: The AuF sends an authorization response message #Aa to the CCF.

Correspondingly, the CCF receives the authorization response message #Aa from the AuF.

The authorization response message #Aa includes a token #1.

S609: The CCF sends an authorization response message #Aa (that is, an example of an authorization response message) to the API invoker.

Correspondingly, the API invoker receives the authorization response message #Aa from the CCF.

The authorization response message #Aa includes a token 2 with integrity protection.

Optionally, the token #2 may be consistent with the token #1.

Optionally, the token #2 may be generated by the CCF. After receiving the token #1 in step S608, the CCF determines to generate the token #2.

The token #2 includes a claim (claims) and a signature, and the signature may be a digital signature of the CCF for the token. For example, the claim includes one or more of the following: expiration time, an API invoker ID, a service API ID, or a user identifier 1.

Optionally, the claim may further include one or more of the following: generation time of the token, validity time of the token, expiration time of validity of the token, or the like.

Optionally, the claim may further include another parameter, for example, an allowed resource and network slice information. This is not specifically limited in this application.

S610: Optionally, the CCF sends a subscription information update request message #Aa to a UDM.

Correspondingly, the UDM receives the subscription information update request message #Aa from the AEF.

The subscription information update request message #Aa is used to update user consent information of LTE. The subscription information update message #Aa may include one or more of the following: a user identifier 2, a data processing purpose, an API invoker ID, expiration time, or a user consent result.

It should be understood that the user identifier 2 is converted from the user identifier 1, and may be an SUPI, the data processing purpose is obtained through conversion based on the server API ID, and the user consent result may be obtained based on the user consent information #Aa in

### step S606.

In this implementation, the CCF updates subscription information of the UE on the UDM, so that a quantity of times that the AuF requests RO authorization can be reduced.

S613: The API invoker sends an API invocation request message #Aa (that is, an example of a first API invocation request message) to the AEF.

Correspondingly, the AEF receives the API invocation request message #Aa from the API invoker.

The API invocation request message #Aa includes a token #2 and a user identifier 1.

S614: The AEF checks the token #2.

For example, if the token #2 is the token #1, the AEF may check the token #2 with reference to step S460.

If the token #2 is generated by the CCF, an implementation in which the AEF checks the token #2 includes the following check content:
(1) The AEF checks the signature of the token #2. The AEF checks the signature of the token #2 based on a preconfigured credential (such as, a certificate) of the CCF.
(2) The AEF checks the claim of the token #2.

For example, the AEF may determine whether the user identifier 1 in the API invocation request message #Aa is consistent with the user identifier 1 in the token.

Optionally, the AEF determines whether the API invoker ID in the API invocation request message #Aa is consistent with the API invoker ID in the token; or the AEF determines whether the service API ID in the API invocation request message #Aa is consistent with the service API ID in the token; or the AEF determines, based on a comparison between the expiration time in the token and current time, whether the token is still valid.

Optionally, the token may be generally reused by the API invoker within a validity period.

Optionally, the claim may further include one or more of the following: generation time of the token, validity time of the token, expiration time of validity of the token, or the like. For example, if the validity time of the token is 12h, the generation time of the token is 2:30, and time at which the AEF receives the API invocation request message #B is 12:30, the AEF may accept the API invocation request of the API invoker when the signature and specific information content of the token are checked. For another example, if the expiration time of validity of the token is 12:30, and time at which the AEF receives the API invocation request message #B is 12:00, the AEF may accept the API invocation request of the API invoker and the like when the signature and specific information content of the token are checked.

S615: The AEF sends an API invocation response message #Aa to the API invoker.

Correspondingly, the API invoker receives the API invocation response message #Aa from the AEF.

The API invocation response message #Aa is used to return a result of invoking the target API by the API invoker ID to operate the user data. For example, the API invoker ID is authorized to have permission to invoke the target API to operate the user data.

For example, if a server invokes, from the AEF by using the API invocation request message #Aa, an API for requesting a UE identifier, for example, Nnef_UEIdentifier_Get, input user information of the API is set to an IP address or a domain name of a UE, and an AF ID is set to an ID of the discussed server, the AEF return the API invocation response message #Aa, where the message includes an external identifier of the UE, for example, a GPSI.

According to the method disclosed in this application, based on the token in FIG. 2(a), the CCF is introduced as an intermediate node to forward a message between the API invoker and the AuF, to implement authorization of a finer granularity while reducing interaction signaling between the API invoker and the AuF, so that user consent information is considered in an authorization process, and the AEF authorizes the API invoker to access an API and invoke data of a user. In addition, in a manner of generating a token by the CCF instead of the AuF, a quantity of credentials configured by the AEF can be reduced, without configuring a credential of the AuF. In addition, a current existing token can be reused, without defining a new token, thereby less changing a standard protocol. This implementation in which user authorization is required when user data is processed, and user privacy information is protected can avoid user privacy exposure, and reduce a potential security risk faced by a network function in a mobile communication network.

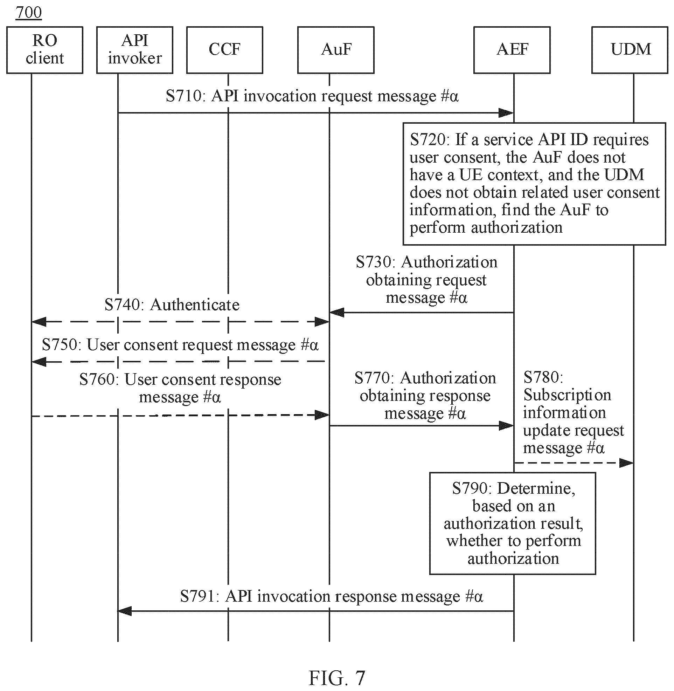

FIG. 7 is a schematic flowchart of a communication method 700 according to an embodiment of this application. A difference from the method 600 lies in that, in this implementation, upgrade is performed only on an AEF and an AuF, and authorization of a finer granularity may be implemented without affecting an API invoker, that is, the API invoker is authorized to access an API and process data of a user. As shown in FIG. 7, the method includes the following multiple steps.

S710: The API invoker sends an API invocation request message #α to the AEF.

Correspondingly, the AEF receives the API invocation request message #α from the API invoker.

For example, the API invocation request message #α is used to request to invoke a service API to operate personal data of a user, and the API invocation request message #α includes an identifier of the API invoker.

Optionally, the API invocation request message #α further includes a user identifier 1 and/or a service API ID.

Optionally, the API invocation request message #α carries a service API ID. For example, the API invocation request message #A may include but is not limited to: a location message Nnef_Location, a get message Nnef_UEIdentifier_Get, an analytics subscription message Nnwdaf_AnalyticsSubscription_Subscribe, and the like.

S720: The AEF determines whether the current API invocation requires user consent, and generates an authorization obtaining request message #α.

For example, the AEF may determine, based on local configuration information, whether the current API requires user consent. For example, the local configuration information may be an API list, and all APIs in the API list are APIs that require user consent.

Optionally, the API list may further correspond to an AuF address, that is, each API corresponds to one AuF address. In this case, the AEF may determine, based on the API list, an AuF address corresponding to the service API.

In an example, when it is determined that user consent is required for the API invoker to invoke the current service API, and the AEF does not have a UE context corresponding to the user identifier 1, or the UE context corresponding to the user identifier 1 does not store user consent information of the UE, the AEF determines that the AuF needs to be authorized.

In another example, when it is determined that user consent is required for the API invoker to invoke the current service API, and the AEF fails to obtain the user consent information of the UE from a UDM, the AEF determines that the AuF needs to be authorized.

Optionally, the subscription information obtaining request message may be a Nudm_SDM_Get request message, and the subscription information obtaining response message may be a Nudm_SDM_Get response message.

Optionally, if the AEF has the user consent information of the UE, and the user consent information indicates that the UE consents to the API invoker invoking the service API to operate the personal data of the user, the AEF may directly perform step S791.

S730: The AEF sends an authorization obtaining request message #α to the AuF.

Correspondingly, the AuF receives the authorization obtaining request message #α from the AEF.

The authorization obtaining request message #α includes an API invoker ID, a user identifier 2, and a service API ID. The user identifier 2 is obtained from the user identifier 1. The AEF may obtain the user identifier 2 from another network element through the user identifier 1, so that the user identifier 2 can be identified by the AuF and an address of an RO can be determined, that is, steps S740 to S760 are performed.

S740: Optionally, authentication is performed between the AuF and the RO client.

Optionally, if the AuF has authentication information of a related user, this step may be omitted.

For a specific authentication mode, refer to an authentication mode defined in an existing standard. For brevity, details are not described herein again.

S750: Optionally, the AuF sends a user consent request message #α to the RO client.

Correspondingly, the RO client receives the user consent request message #α from the AuF.

For example, after the authentication in step S740 succeeds, the AuF sends the user consent request message #α to the RO, where the user consent request message #α may include content such as a client ID and a scope.

S760: Optionally, the RO client sends a user consent response message #α to the AuF.

Correspondingly, the AuF receives the user consent response message #α from the RO client.

For example, after the user clicks Consent or Dissent, the RO may return the user consent response message #α to the AuF.

For specific implementations of steps S750 and S760, refer to steps S234 and S235 in FIG. 2(c) or steps S244 and S245 in FIG. 2(d). For brevity, details are not described herein again.

S770: The AuF sends an authorization obtaining response message #α to the AEF.

Correspondingly, the AEF receives the authorization obtaining response message #α from the AuF.

The authorization obtaining response message #α includes an authorization result, that is, indicates whether the user consents to the API invoker invoking the service API to operate the personal data of the user.

The authorization result is obtained by the AuF based on content of the user consent response message #a. For example, if the user clicks Consent, the authorization result is authorization; if the user clicks Dissent, the authorization result is not authorization.

S780: Optionally, the AEF sends a subscription information update request message #α to the UDM.

Correspondingly, the UDM receives the subscription information update request message #α from the AEF.

Optionally, if the authorization result indicates user authorization, the AEF sends a subscription information update message #α to the UDM, where the subscription information update message #α is used to update the user consent information of the UE.

The subscription information update message #α may include one or more of the following: a user identifier 2, a data processing purpose, an API invoker ID, expiration time, or a user consent result. It should be understood that the user identifier 2 is converted from the user identifier 1, and may be an SUPI, the data processing purpose is converted from the server API ID, and the user consent result is obtained based on step S760. In this implementation, the AEF updates subscription information of the UE on the UDM, so that a quantity of times that the AuF requests RO authorization can be reduced.

S790: The AEF determines, based on the authorization result, whether to perform authorization.

For example, if the authorization result in step S770 indicates that the user has performed authorization, the AEF may perform step S791. If the authorization result indicates that the user does not perform authorization, the AEF may reject the API invocation request of the API invoker.

S791: The AEF sends an API invocation response message #α to the API invoker.

Correspondingly, the API invoker receives the API invocation response message #α from the AEF.

The API invocation response message #α is used to authorize the API invoker ID to have permission to invoke the target API to operate the user data. For example, the API invoker ID is authorized to have permission to invoke the target API to operate the user data.

For example, if a server invokes, from the AEF by using the API invocation request message #Aa, an API for requesting a UE identifier, for example, Nnef_UEIdentifier_Get, input user information of the API is set to an IP address or a domain name of a UE, and an AF ID is set to an ID of the discussed server, the AEF return the API invocation response message #Aa, where the message includes an external identifier of the UE, for example, a GPSI.

According to the method disclosed in this application, authorization of a finer granularity can be implemented without affecting the API invoker, that is, the API invoker is authorized to access an API and process data of a user, so that user consent information is considered in an authorization process, and the AEF can authorize the API invoker to access an API and invoke data of a user. This implementation in which user authorization is required when user data is processed, and user privacy information is protected can avoid user privacy exposure, and reduce a potential security risk faced by a network function in a mobile communication network.

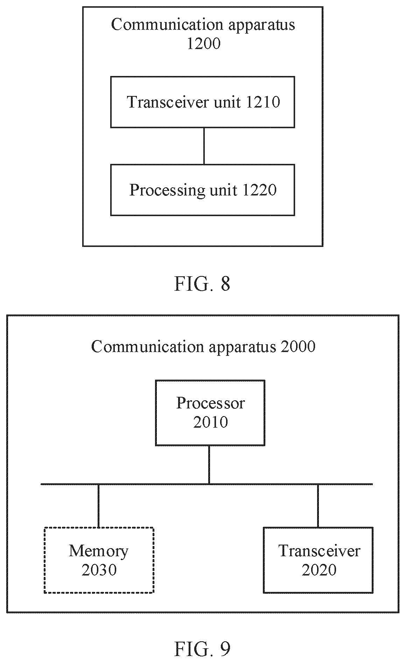

The foregoing describes in detail embodiments on a communication method side of this application with reference to FIG. 1 to FIG. 7. The following describes in detail embodiments on a communication apparatus side of this application with reference to FIG. 8 and FIG. 9. It should be understood that descriptions of the apparatus embodiments correspond to the descriptions of the method embodiments. Therefore, for a part that is not described in detail, refer to the foregoing method embodiments.

FIG. 8 is a schematic block diagram of a communication apparatus according to an embodiment of this application. As shown in FIG. 8, the device 1200 may include a transceiver unit 1210 and a processing unit 1220. The transceiver unit 1210 may perform external communication, and the processing unit 1220 is configured to process data. The transceiver unit 1210 may also be referred to as a communication interface or a transceiver unit.

In a possible design, the device 1200 may implement steps or procedures performed by the API invoker corresponding to the foregoing method embodiments. The processing unit 1220 is configured to perform processing-related operations of the API invoker in the foregoing method embodiments, and the transceiver unit 1210 is configured to perform sending and receiving-related operations of the API invoker in the foregoing method embodiments.

For example, the transceiver unit 1210 is configured to send an authorization request message to an authorization function network element, where the authorization request message includes an identifier of the API invoker.

The transceiver unit 1210 is further configured to receive an authorization response message from the authorization function network element, where the authorization response message includes a first token with integrity protection, the first token indicates that the API invoker has permission to access data of a target user, and the first token includes an identifier of the target user.

The transceiver unit 1210 is further configured to send a first API invocation request message to an API exposing function network element AEF, where the first API invocation request message is used to request to invoke a target API to operate the data of the target user, and the first API invocation request message includes an identifier of the target user and the first token.

In another possible design, the device 1200 may implement steps or procedures performed by the API exposing function network element corresponding to the foregoing method embodiments. The transceiver unit 1210 is configured to perform sending and receiving-related operations of the API exposing function network element in the foregoing method embodiments, and the processing unit 1220 is configured to perform processing-related operations of the API exposing function network element in the foregoing method embodiments.

For example, the transceiver unit 1210 is configured to receive a first API invocation request message from an API invoker, where the first API invocation request message is used to request to invoke a target API to operate data of a target user, the first API invocation request message includes a first token with integrity protection and an identifier of the target user, the first token indicates that the API invoker has permission to access the data of the target user, and the first token includes an identifier of the target user.

The processing unit 1220 is configured to determine, based on the first token, whether the API invoker has permission to operate the data of the target user.

The processing unit 1220 is further configured to determine, based on a determining result, whether to provide the API invoker with permission to access the data of the target user.

In still another possible design, the device 1200 may implement steps or procedures performed by the authorization function network element corresponding to the foregoing method embodiments. The transceiver unit 1210 is configured to perform sending and receiving-related operations of the authorization function network element in the foregoing method embodiments, and the processing unit 1220 is configured to perform processing-related operations of the authorization function network element in the foregoing method embodiments.

For example, the transceiver unit 1210 is configured to receive an authorization request message from an application programming interface API invoker, where the authorization request message includes an identifier of the API invoker.

The processing unit 1220 is configured to generate, by the authorization function network element, a first token with integrity protection when determining that a target user consents to the API invoker operating data of the target user, where the first token indicates that the API invoker has permission to access the data of the target user, and the first token includes an identifier of the target user.

The transceiver unit 1210 is further configured to send an authorization response message to the API invoker, where the authorization response message includes the first token.

In still another possible design, the device 1200 may implement steps or procedures performed by the CCF corresponding to the foregoing method embodiments. The transceiver unit 1210 is configured to perform sending and receiving-related operations of the CCF in the foregoing method embodiments, and the processing unit 1220 is configured to perform processing-related operations of the CCF in the foregoing method embodiments.

For example, the transceiver unit 1210 is configured to receive a second request message from an API invoker, where the second request message is used to request to invoke a target API to operate data of a target user, and the second request message includes an identifier of the target user and an identifier of the target API. The transceiver unit 1210 is further configured to send an authorization indication to the API invoker.

It should be understood that the device 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1200 may be specifically a transmit end in the foregoing embodiments, and may be configured to perform the procedures and/or steps corresponding to the transmit end in the foregoing method embodiments; or the device 1200 may be specifically a receive end in the foregoing embodiments, and may be configured to perform the procedures and/or steps corresponding to the receive end in the foregoing method embodiments. To avoid repetition, details are not described herein again.

The device 1200 in the foregoing solutions has a function of implementing the corresponding steps performed by the transmit end in the foregoing methods, or has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 8 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 9 shows a communication apparatus 2000 according to an embodiment of this application. As shown in FIG. 9, the device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

In a possible implementation, the device 2000 is configured to implement the procedures and steps corresponding to the API invoker in the foregoing method embodiments.

For example, the transceiver 2020 is configured to send an authorization request message to an authorization function network element, where the authorization request message includes an identifier of the API invoker.

The transceiver 2020 is further configured to receive an authorization response message from the authorization function network element, where the authorization response message includes a first token with integrity protection, the first token indicates that the API invoker has permission to access data of a target user, and the first token includes an identifier of the target user.

The transceiver 2020 is further configured to send a first API invocation request message to an API exposing function network element AEF, where the first API invocation request message is used to request to invoke a target API to operate the data of the target user, and the first API invocation request message includes an identifier of the target user and the first token.

In another possible implementation, the device 2000 is configured to implement the procedures and steps corresponding to the authorization function network element in the foregoing method embodiments.

For example, the transceiver 2020 is configured to receive an authorization request message from an application programming interface API invoker, where the authorization request message includes an identifier of the API invoker.

The processor 2010 is configured to generate, by the authorization function network element, a first token with integrity protection when determining that the target user consents to the API invoker operating data of the target user, where the first token indicates that the API invoker has permission to access the data of the target user, and the first token includes an identifier of the target user.

The transceiver 2020 is further configured to send an authorization response message to the API invoker, where the authorization response message includes the first token.

In still another possible implementation, the device 2000 is configured to implement the procedures and steps corresponding to the AEF in the foregoing method embodiments.

For example, the transceiver 2020 is configured to receive a first API invocation request message from an API invoker, where the first API invocation request message is used to request to invoke a target API to operate data of a target user, the first API invocation request message includes a first token with integrity protection and an identifier of the target user, the first token indicates that the API invoker has permission to access the data of the target user, and the first token includes an identifier of the target user.

The processor 2010 is configured to determine, based on the first token, whether the API invoker has permission to operate the data of the target user.

The processor 2010 is further configured to determine, based on a determining result, whether to provide the API invoker with permission to access the data of the target user.

In still another possible implementation, the device 2000 is configured to implement the procedures and steps corresponding to the CCF in the foregoing method embodiments.

For example, the transceiver 2020 is configured to receive a second request message from an API invoker, where the second request message is used to request to invoke a target API to operate data of a target user, and the second request message includes an identifier of the target user and an identifier of the target API.

The transceiver 2020 is further configured to send an authorization indication to the API invoker.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data to the processor. A part of the memory may further include a nonvolatile random access memory. For example, the memory may further store information of a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmitter or the receiver.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the methods in the foregoing embodiments.

According to the methods provided in embodiments of this application, this application further provides a computer-readable medium, storing program code. When the program code is run on a computer, the computer is enabled to perform the methods in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by an application programming interface API invoker, an authorization request message to an authorization function network element, wherein the authorization request message comprises an identifier of a target user;
receiving, by the API invoker, an authorization response message from the authorization function network element, wherein the authorization response message comprises a first token with integrity protection, the first token indicates that the API invoker has permission to access data of the target user, and the first token comprises an identifier of the target user; and
sending, by the API invoker, a first API invocation request message to an API exposing function network element AEF, wherein the first API invocation request message is used to request to invoke a target API to operate the data of the target user, and the first API invocation request message comprises an identifier of the target user and the first token.

2. The method according to claim 1, wherein before the sending, by an API invoker, an authorization request message to an authorization function network element, the method further comprises:
sending, by the API invoker, a second API invocation request message to the AEF, wherein the second API invocation request message is used to request to invoke the target API to operate the data of the target user, and the second API invocation request message comprises an identifier of the target user; and
receiving, by the API invoker, an authorization indication from the AEF; and
the sending, by an API invoker, an authorization request message to an authorization function network element comprises:
sending, by the API invoker, the authorization request message to the authorization function network element based on the authorization indication.

3. The method according to claim 2, wherein the authorization indication comprises an address of the authorization function network element; and
the receiving, by the API invoker, an authorization indication from the AEF comprises:
receiving, by the API invoker, a second API invocation response message from the AEF, wherein the second API invocation response message comprises the authorization indication.

4. The method according to claim 1, wherein before the sending, by an API invoker, an authorization request message to an authorization function network element, the method further comprises:
sending, by the API invoker, a second request message to a common API framework core function network element CCF, wherein the second request message is used to request to register the API invoker with the CCF, or the second request message is used to request the API invoker to discover the target API; and
receiving, by the API invoker, an authorization indication from the CCF; and
the sending, by an API invoker, an authorization request message to an authorization function network element comprises:
sending, by the API invoker, the authorization request message to the authorization function network element based on the authorization indication.

5. The method according to claim 4, wherein the authorization indication comprises an address of the authorization function network element; and
the receiving, by the API invoker, an authorization indication from the CCF comprises:
receiving, by the API invoker, a second API invocation response message from the CCF, wherein the second API invocation response message comprises the authorization indication.

6. The method according to claim 3 or 5, wherein the second API invocation response message is a redirection request message.

7. The method according to claim 3 or 5, wherein the authorization indication further comprises a cause value, and the cause value indicates that authorization of the target user is required for requesting to operate the data of the target user.

8. The method according to claim 2 or 4, wherein the authorization indication comprises a cause value, and the cause value indicates that authorization of the target user is required for requesting to operate the data of the target user; and
the sending, by the API invoker, the authorization request message to the authorization function network element based on the authorization indication comprises:
determining, by the API invoker, an address of the authorization function network element based on the cause value; and
sending, by the API invoker, the authorization request message to the authorization function network element based on the address of the authorization function network element.

9. The method according to claim 8, wherein the determining, by the API invoker, an address of the authorization function network element based on the cause value comprises:
obtaining, by the API invoker, the address of the authorization function network element from a preconfigured address list based on the cause value.

10. The method according to any one of claims 2 to 9, wherein the authorization indication further comprises an authorization type, and the authorization request message further comprises a response type; and
before the sending, by the API invoker, the authorization request message to the authorization function network element based on the authorization indication, the method further comprises:
determining, by the API invoker, the response type based on the authorization type.

11. The method according to any one of claims 1 to 10, wherein the first API invocation request message further comprises a second token, the second token indicates that the API invoker has permission to invoke the target API, and the second token comprises an identifier of the API invoker and an identifier of the target API; and
before the sending, by the API invoker, a first API invocation request message to an AEF, the method further comprises:
sending, by the API invoker, a first request message to a common API framework core function network element CCF, wherein the first request message is used to request to obtain permission to invoke the target API, and the first request message comprises an identifier of the API invoker and an identifier of the target API; and
receiving, by the API invoker, the second token from the CCF.

12. The method according to any one of claims 1 to 11, wherein the first token further comprises one or more of the following:
expiration time;
an identifier of the API invoker;
an identifier of the target API; or
a signer.

13. The method according to any one of claims 1 to 12, wherein the authorization request message further comprises:
an identifier of the target API and/or the identifier of the target user.

14. A communication method, comprising:
receiving, by an application programming interface API exposing function network element AEF, a first API invocation request message from an API invoker, wherein the first API invocation request message is used to request to invoke a target API to operate data of a target user, the first API invocation request message comprises a first token with integrity protection and an identifier of the target user, the first token indicates that the API invoker has permission to access the data of the target user, and the first token comprises an identifier of the target user;
determining, by the AEF based on the first token, whether the API invoker has permission to operate the data of the target user; and
determining, by the AEF based on a determining result, whether to provide the API invoker with permission to access the data of the target user.

15. The method according to claim 14, wherein the determining, by the AEF based on the first token, whether the API invoker has permission to operate the data of the target user comprises:
checking, by the AEF, the integrity protection of the first token based on a credential of an authorization function network element, wherein the authorization function network element is a network element that generates the first token; and
when the check on the integrity protection of the first token succeeds, determining, by the AEF, whether the identifier of the target user carried in the first token is consistent with the identifier of the target user carried in the first API invocation request message.

16. The method according to claim 15, wherein the first token further comprises a signer; and
before the checking, by the AEF, the integrity of the first token based on a credential of an authorization function network element, the method further comprises:
obtaining, by the AEF, the credential of the authorization function network element based on the signer.

17. The method according to claim 15 or 16, wherein the first token further comprises an identifier of the API invoker, the first API invocation request message further comprises an identifier of the API invoker, and the determining, by the AEF based on the first token, whether the API invoker has permission to operate the data of the target user further comprises:
determining, by the AEF, whether the identifier of the API invoker carried in the first token is consistent with the identifier of the API invoker carried in the first API invocation request message.

18. The method according to claim 17, wherein the first token further comprises an identifier of the target API, the first API invocation request message further comprises an identifier of the target API, and the determining, by the AEF based on the first token, whether the API invoker has permission to operate the data of the target user further comprises:
determining, by the AEF, whether the identifier of the target API carried in the first token is consistent with the identifier of the target API carried in the first API invocation request message.

19. The method according to any one of claims 14 to 18, wherein the first API invocation request message further comprises a second token; and
before the determining whether the API invoker has permission to operate the data of the target user, the method further comprises:
determining, by the AEF based on the second token, that the API invoker has permission to invoke the target API.

20. The method according to claim 19, wherein the second token further comprises an identifier of the target API, and the first API invocation request message further comprises an identifier of the target API; and
the determining, by the AEF based on the second token, that the API invoker has permission to invoke the target API comprises:
determining, by the AEF, that the identifier of the target API carried in the second token is consistent with the identifier of the target API carried in the first API invocation request message.

21. The method according to any one of claims 14 to 20, wherein before the receiving, by an AEF, a first API invocation request message from an API invoker, the method further comprises:
receiving, by the AEF, a second API invocation request message from the API invoker, wherein the second API invocation request message is used to request to invoke the target API to operate the data of the target user, and the second API invocation request message comprises an identifier of the target user; and
sending, by the AEF, an authorization indication to the API invoker, wherein the authorization indication indicates that authorization of the target user is required for requesting to operate the data of the target user.

22. The method according to claim 21, wherein the authorization indication comprises an address of the authorization function network element; and
the sending, by the AEF, an authorization indication to the API invoker comprises:
sending, by the AEF, a second API invocation response message to the API invoker, wherein the second API invocation response message comprises the authorization indication.

23. The method according to claim 22, wherein the second API invocation response message is a redirection request message.

24. The method according to claim 21 or 22, wherein the authorization indication comprises a cause value, and the cause value indicates that authorization of the target user is required for requesting to operate the data of the target user.

25. The method according to any one of claims 8 to 24, wherein before the sending, by the AEF, an authorization indication to the API invoker, the method further comprises:
determining, by the AEF, that authorization of the target user is required for requesting to operate the data of the target user.

26. The method according to claim 25, wherein the determining, by the AEF, that authorization of the target user is required for requesting to operate the data of the target user comprises:
sending, by the AEF, an obtaining request message to a unified data management function network element UDM, wherein the obtaining request message is used to request to obtain user consent information of the target user;
receiving, by the AEF, a response message from the UDM; and
determining, by the AEF based on the response message, that authorization of the target user is required for requesting to operate the data of the target user.

27. The method according to claim 26, wherein before the sending, by the AEF, an obtaining request message to a UDM, the method further comprises:
determining, by the AEF, that the AEF does not store the user consent information of the target user, wherein the user consent information indicates that the target user consents to operate the data of the target user.

28. The method according to any one of claims 14 to 27, wherein the method further comprises:
sending, by the AEF, a third request message to a common API framework core function network element CCF, wherein the third request message is used to request to obtain an access policy for the API invoker to invoke the target API, and the third request message comprises an identifier of the API invoker and an identifier of the target API; and
the determining, by the AEF based on a determining result, whether to provide the API invoker with permission to access the data of the target user comprises:
when the API invoker has permission to operate the data of the target user, and the access policy indicates that the API invoker is allowed to invoke the target API, providing, by the AEF, the API invoker with permission to access the data of the target user.

29. The method according to any one of claims 14 to 28, wherein the method further comprises:
when the API invoker has permission to operate the data of the target user, sending, by the AEF, a subscription information update message to a unified data management function UDM, wherein the subscription information update message is used to update user consent information of the target user, and the user consent information indicates that the target user consents to operate the data of the target user.

30. A communication method, comprising:
receiving, by an authorization function network element, an authorization request message from an application programming interface API invoker, wherein the authorization request message comprises an identifier of a target user;
generating, by the authorization function network element, a first token with integrity protection when determining that the target user consents to the API invoker operating data of the target user, wherein the first token indicates that the API invoker has permission to access the data of the target user, and the first token comprises an identifier of the target user; and
sending, by the authorization function network element, an authorization response message to the API invoker, wherein the authorization response message comprises the first token.

31. The method according to claim 30, wherein the authorization request message further comprises an identifier of a target API and the identifier of the target user, and the generating, by the authorization function network element, a first token with integrity protection comprises:
generating, by the authorization function network element, a claim based on an identifier of the API invoker, the identifier of the target API, and the identifier of the target user;
generating, by the authorization function network element, a signature based on the claim; and
generating, by the authorization function network element, the first token with integrity protection based on the claim and the signature.

32. The method according to claim 30 or 31, wherein the first token further comprises one or more of the following:
expiration time;
an identifier of the API invoker;
an identifier of the target API; or
a signer.

33. A communication method, comprising:
receiving, by a common application programming interface API framework core function network element CCF, a second request message from an API invoker, wherein the second request message is used to request to register the API invoker with the CCF, or the second request message is used to request the API invoker to discover a target API; and
sending, by the CCF, an authorization indication to the API invoker.

34. The method according to claim 33, wherein the authorization indication comprises an address of an authorization function network element; and
the sending, by the CCF, an authorization indication to the API invoker comprises:
sending, by the CCF, a second response message to the API invoker, wherein the second response message comprises the authorization indication.

35. The method according to claim 34, wherein the second response message is a redirection request message.

36. The method according to claim 34, wherein the authorization indication further comprises a cause value, and the cause value indicates that authorization of a target user is required for requesting to operate data of the target user.

37. The method according to any one of claims 33 to 36, wherein the method further comprises:
receiving, by the CCF, an authorization request message from the API invoker, wherein the authorization request message comprises an identifier of the API invoker, an identifier of the target API, and an identifier of the target user;
sending, by the CCF, the authorization request message to the authorization function network element;
receiving, by the CCF, an authorization response message from the authorization function network element, wherein the authorization response message comprises a first token with integrity protection, the first token indicates that the API invoker has permission to access the data of the target user, and the first token comprises an identifier of the target user; and
sending, by the CCF, the authorization response message to the API invoker.

38. The method according to claim 37, wherein before the sending, by the CCF, the authorization request message to the authorization function network element, the method further comprises:
determining, by the CCF, the address of the authorization function network element based on a preconfigured address list; and
sending, by the CCF, the authorization request message to the authorization function network element based on the address of the authorization function network element.

39. The method according to any one of claims 33 to 38, wherein the method further comprises:
receiving, by the CCF, a first request message from the API invoker, wherein the first request message is used to request to obtain permission to invoke the target API, and the first request message comprises an identifier of the API invoker and an identifier of the target API; and
sending, by the CCF, a second token to the API invoker, wherein the second token indicates that the API invoker has permission to invoke the target API, and the second token comprises an identifier of the API invoker and an identifier of the target API.

40. The method according to any one of claims 33 to 39, wherein the method further comprises:
receiving, by the CCF, a third request message from an AEF, wherein the third request message is used to request to obtain an access policy for the API invoker to invoke the target API, the access policy indicates whether the API invoker is allowed to invoke the target API, and the third request message comprises an identifier of the API invoker and an identifier of the target API; and
sending, by the CCF, the access policy to the AEF.

41. A communication method, comprising:
receiving, by an authorization function network element, an authorization request message from an application programming interface API invoker, wherein the authorization request message comprises an identifier of a target user;
generating, by the authorization function network element, a first token with integrity protection when determining that the target user consents to the API invoker operating data of the target user, wherein the first token indicates that the API invoker has permission to access the data of the target user, and the first token comprises an identifier of the target user;
sending, by the authorization function network element, an authorization response message to the API invoker, wherein the authorization response message comprises the first token;
receiving, by an API exposing function network element AEF, a first API invocation request message from the API invoker, wherein the first API invocation request message is used to request to invoke a target API to operate the data of the target user, and the first API invocation request message comprises the first token and an identifier of the target user;
determining, by the AEF based on the first token, whether the API invoker has permission to operate the data of the target user; and
determining, by the AEF based on a determining result, whether to provide the API invoker with permission to access the data of the target user.

42. The method according to claim 41, wherein before the determining, by the AEF based on the first token, whether the API invoker has permission to operate the data of the target user, the method further comprises:
determining, by the AEF based on a second token, that the API invoker has permission to invoke the target API, wherein the second token comprises an identifier of the API invoker and an identifier of the target API, and the second token indicates that the API invoker has permission to invoke the target API.

43. The method according to claim 42, wherein the first API invocation request message further comprises the second token, and the method further comprises:
receiving, by a common API framework core function network element CCF, a first request message from the API invoker, wherein the first request message is used to request to obtain permission to invoke the target API, and the first request message comprises an identifier of the API invoker and an identifier of the target API; and
sending, by the CCF, the second token to the API invoker, and receiving, by the API invoker, the second token from the CCF.

44. The method according to any one of claims 41 to 43, wherein the authorization request message is sent based on an authorization indication, and the method further comprises:
receiving, by the common API framework core function network element CCF, a second request message from the API invoker, wherein the second request message is used to request to register the API invoker with the CCF, or the second request message is used to request the API invoker to discover the target API; and
sending, by the CCF, the authorization indication to the API invoker, wherein the authorization indication is used by the API invoker to send the authorization request message to the authorization function network element based on the authorization indication.

45. A communication apparatus, comprising a processor, wherein the processor is coupled to a memory, and the processor is configured to execute a computer program stored in the memory, so that the apparatus performs the method according to any one of claims 1 to 13, the method according to any one of claims 14 to 29, the method according to any one of claims 30 to 32, or the method according to any one of claims 33 to 40.

46. A computer-readable storage medium, wherein the computer-readable storage medium stores a computer program, and when the computer program is run, a computer is enabled to perform the method according to any one of claims 1 to 13, the method according to any one of claims 14 to 29, the method according to any one of claims 30 to 32, or the method according to any one of claims 33 to 40.

47. A communication system, comprising an authorization function network element and an application programming interface API exposing function network element AEF, wherein the AEF is configured to perform the method according to any one of claims 14 to 29, and the authorization function network element is configured to perform the method according to any one of claims 30 to 32.

48. The communication system according to claim 47, wherein the communication system further comprises a common API framework core function network element CCF, and the CCF is configured to perform the method according to any one of claims 33 to 40.

49. The communication system according to claim 47 or 48, wherein the communication system further comprises an application programming interface API invoker, and the API invoker is configured to perform the method according to any one of claims 1 to 13.

50. A chip, comprising a processor, configured to invoke a computer program from a memory and run the computer program, so that a communication apparatus in which the chip is installed performs the method according to any one of claims 1 to 13, the method according to any one of claims 14 to 29, the method according to any one of claims 30 to 32, or the method according to any one of claims 33 to 40.

51. A computer program product, wherein the computer program product comprises computer program code, and when the computer program code is run on a computer, the computer is enabled to perform the method according to any one of claims 1 to 13, the method according to any one of claims 14 to 29, the method according to any one of claims 30 to 32, or the method according to any one of claims 33 to 40.
